(19) **Europäisches Patentamt / European Patent Office / Office européen des brevets**

(11) **EP 4 229 624 B1**

(12) **EUROPEAN PATENT SPECIFICATION**

(45) Date of publication and mention
of the grant of the patent:
**27.08.2025 Bulletin 2025/35**

(21) Application number: **21791345.8**

(22) Date of filing: **13.10.2021**

(51) International Patent Classification (IPC):
**G06N 3/08** *(2023.01)* **G06N 3/045** *(2023.01)*
**G10L 13/047** *(2013.01)* **G10L 25/30** *(2013.01)*
**G10L 13/02** *(2013.01)* **G10L 13/08** *(2013.01)*
**G06N 3/02** *(2006.01)*

(52) Cooperative Patent Classification (CPC):
**G10L 13/02; G06N 3/02; G06N 3/045; G06N 3/08;**
**G10L 13/047; G10L 13/08; G10L 25/30;**
G06N 3/048

(86) International application number:
**PCT/EP2021/078371**

(87) International publication number:
**WO 2022/079129 (21.04.2022 Gazette 2022/16)**

(54) **AUDIO GENERATOR AND METHODS FOR GENERATING AN AUDIO SIGNAL**

AUDIOGENERATOR UND VERFAHREN ZUR ERZEUGUNG EINES AUDIOSIGNALS

GÉNÉRATEUR AUDIO ET PROCÉDÉS DE GÉNÉRATION D'UN SIGNAL AUDIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.10.2020 EP 20202058
06.08.2021 PCT/EP2021/072075**

(43) Date of publication of application:
**23.08.2023 Bulletin 2023/34**

(73) Proprietor: **Fraunhofer-Gesellschaft zur
Förderung
der angewandten Forschung e.V.
80686 München (DE)**

(72) Inventors:
• **AHMED, Ahmed Mustafa Mahmoud
91058 Erlangen (DE)**
• **PIA, Nicola
91058 Erlangen (DE)**
• **FUCHS, Guillaume
91058 Erlangen (DE)**
• **MULTRUS, Markus
91058 Erlangen (DE)**

• **KORSE, Srikanth
91058 Erlangen (DE)**
• **GUPTA, Kishan
91058 Erlangen (DE)**
• **BÜTHE, Jan
91058 Erlangen (DE)**

(74) Representative: **Zuccollo, Alberto et al
Schoppe, Zimmermann, Stöckeler
Zinkler, Schenk & Partner mbB
Patentanwälte
Radlkoferstraße 2
81373 München (DE)**

(56) References cited:
**WO-A1-2019/222591 CN-A- 110 060 690
US-B1- 10 068 557**

• **SYNCED: "Clone a Voice in Five Seconds With
This AI Toolbox | by Synced | SyncedReview |
Medium", 3 September 2019 (2019-09-03), pages
1 - 5, XP055799049, Retrieved from the Internet
<URL:https://medium.com/syncedreview/
clone-a-voice-in-five-seconds-with-this-ai-tool
box-f3f116b11281> [retrieved on 20210427]**

**Description**

<u>Introductory remarks</u>

In the following, different inventive embodiments and aspects will be described. Also, further embodiments will be defined by the enclosed claims. It should be noted that any embodiments as defined by the claims can be supplemented by any of the details (features and functionalities) described in this description.

Also, the embodiments described in this description can be used individually, and can also be supplemented by any of the features herein, or by any feature included in the claims.

Also, it should be noted that individual aspects described herein can be used individually or in combination. Thus, details can be added to each of said individual aspects without adding details to another one of said aspects.

It should also be noted that the present disclosure describes, explicitly or implicitly, features usable in an audio generator and/or a method and/or a computer program product. Thus, any of the features described herein can be used in the context of a device, a method, and/or a computer program product.

Moreover, features and functionalities disclosed herein relating to a method can also be used in a device (configured to perform such functionality). Furthermore, any features and functionalities disclosed herein with respect to a device can also be used in a corresponding method. In other words, the methods disclosed herein can be supplemented by any of the features and functionalities described with respect to the devices.

Also, any of the features and functionalities described herein can be implemented in hardware or in software, or using a combination of hardware and software, as will be described in the section "implementation alternatives".

**<u>Background</u>**

In recent years, neural vocoders have surpassed classical speech synthesis approaches in terms of naturalness and perceptual quality of the synthesized speech signals. The best results can be achieved with computationally-heavy neural vocoders like WaveNet and WaveGlow, while light-weight architectures based on Generative Adversarial Networks, e.g. MelGAN and Parallel WaveGAN, are still inferior in terms of the perceptual quality.

Generative models using Deep Learning for generating audio waveforms, such as WaveNet, LPCNet, and WaveGlow, have provided significant advances in natural-sounding speech synthesis. These generative models called in Text-To-Speech (TTS) applications neural vocoders, outperform both parametric and concatenative synthesis methods. They can be conditioned using compressed representations of the target speech (e.g. mel-spectrogram) for reproducing a given speaker and a given utterance.

Prior works have shown that speech coding at very low bit-rate of clean speech can be achieved using such generative models at the decoder side. This can be done by conditioning the neural vocoders with the parameters from a classical low bit-rate speech coder.

Neural vocoders were also used for speech enhancement tasks, like speech denoising or dere-verberation.

The main problem of these deep generative models is usually the high number of required parameters, and the resulting complexity both during training and synthesis (inference). For example, WaveNet, considered as state-of-the-art for the quality of the synthesized speech, generates sequentially the audio samples one by one. This process is very slow and computationally demanding, and cannot be performed in real time.

Recently, lightweight adversarial vocoders based on Generative Adversarial Networks (GANs), such as MelGAN and Parallel WaveGAN, have been proposed for fast waveform generation. However, the reported perceptual quality of the speech generated using these models is significantly below the baseline of neural vocoders like WaveNet and WaveGlow. A GAN for Text-to-Speech (GAN-TTS) has been proposed to bridge this quality gap, but still at a high computational cost.

There exists a great variety of neural vocoders, which all have drawbacks. Autoregressive vocoders, for example WaveNet and LPCNet, may have very high quality, and be suitable for optimization for inference on CPU, but they are not suitable for usage on GPUs, since their processing cannot be parallelized easily, and they cannot offer not real time processing without compromising the quality.

Normalizing flows vocoders, for example WaveGlow, may also have very high quality, and be suitable for inference on a GPU, but they comprise a very complex model, which takes a long time to train and optimize, it is also not suitable for embedded devices.

GAN vocoders, for example MelGAN and Parallel WaveGAN may be suitable for inference on GPUs and lightweight, but their quality is lower than autoregressive models.

In summary, there still does not exist a low complexity solution delivering high fidelity speech. GANs are the most studied approach to achieve such a goal. The present invention is an efficient solution for this problem.

It is an object of the present invention to provide a lightweight neural vocoder solution which generates speech at very high quality and is trainable with limited computational resources, e.g. for TTS (text-to-speech).

CN 110060690 B discloses a multi-to-many speaker conversion method.

## Brief Description of the Figures

Embodiments according to the present invention will subsequently be described taking reference to the enclosed figures in which:

Fig. 1        shows an audio generator architecture according to embodiments of the present invention,

Fig. 2        shows a discriminator structure which can be used for training of the audio generator according to the present invention,

Fig. 3        shows a structure of a portion of the audio generator according to embodiments of the present invention,

Fig. 4        shows a structure of a portion of the audio generator according to embodiments of the present invention, and

Fig. 5        shows results of a MUSHRA expert listening test of different models.

Fig. 6        shows an audio generator architecture according to embodiments of the present invention

Fig. 7        shows operations which are performed onto signals according to the invention.

Fig. 8        shows operations in a text-to-speech application using the audio generator.

Fig. 9a-9c    show examples of generators.

Fig. 10       shows several possibilities for the inputs and outputs of a block which may be internal or external to the inventive generator.

In the figures, similar reference signs denote similar elements and features.

## Short summary of the invention

In accordance to an aspect, there is provided an audio generator, configured to generate an audio signal from an input signal and target data, the target data representing the audio signal, comprising:

A first processing block, configured to receive first data derived from the input signal and to output first output data, wherein the first output data comprises a plurality of channels, and
a second processing block, configured to receive, as second data, the first output data or data derived from the first output data,
wherein the first processing block comprises for each channel of the first output data:

a conditioning set of learnable layers configured to process the target data to obtain conditioning features parameters, the target data being derived from a text; and
a styling element, configured to apply the conditioning feature parameters to the first data or normalized first data; and

wherein the second processing block is configured to combine the plurality of channels of the second data to obtain the audio signal.

The audio generator may be such that the target data is a spectrogram. The audio generator may be such that the target data is a mel-spectrogram.
The audio generator may be such that the target data comprise at least one acoustic feature among a log-spectrogram, or an MFCC, and a mel-spectrogram or another type of spectrogram obtained from a text.
The audio generator may be configured to obtain the target data by converting an input in form of text or elements of text onto the at least one acoustic feature.
The audio generator may be configured to obtain the target data by converting at least one linguistic feature onto the at least one acoustic feature.
The audio generator may comprise at least one linguistics feature among a phoneme, words prosody, intonation, phrase breaks, and filled pauses obtained from a text.

The audio generator may be configured to obtain the target data by converting an input in form of text or elements of text onto the at least one linguistic feature.

The audio generator may be such that the target data comprise at least one among a character and a word obtained from a text.

The audio generator may be such that the target data are derived from a text using a statistical model, performing text analysis and/or using an acoustic model.

The audio generator may be such that the target data are derived from a text using a learnable model performing text analysis and/or using an acoustic model.

The audio generator may be such that the target data are derived from a text using a rules-based algorithm performing text analysis and/or an acoustic model.

The audio generator may be configured to obtain the target data by elaborating an input.

The audio generator may be configured to derive the target data through at least one deterministic layer.

The audio generator may be configured to derive the target data through at least one learnable layer.

The audio generator may be such that the conditioning set of learnable layers consists of one or at least two convolution layers.

The audio generator may be such that a first convolution layer is configured to convolute the target data or up-sampled target data to obtain first convoluted data using a first activation function.

The audio generator may be such that the conditioning set of learnable layers and the styling element are part of a weight layer in a residual block of a neural network comprising one or more residual blocks.

There is also proposed a method e.g. for generating an audio signal by an audio generator from an input signal and target data, the target data (obtained from text) representing the audio signal, comprising:

> receiving, by a first processing block, first data derived from the input signal; for each channel of a first output data:
>
>> processing, by a conditioning set of learnable layers of the first processing block, the target data, derived from text, to obtain conditioning feature parameters; and
>> applying, by a styling element of the first processing block, the conditioning feature parameters to the first data or normalized first data;
>
> outputting, by the first processing block, first output data comprising a plurality of channels;
> receiving, by a second processing block, as second data, the first output data or data derived from the first output data; and
> combining, by the second processing block, the plurality of channels of the second data to obtain the audio signal.

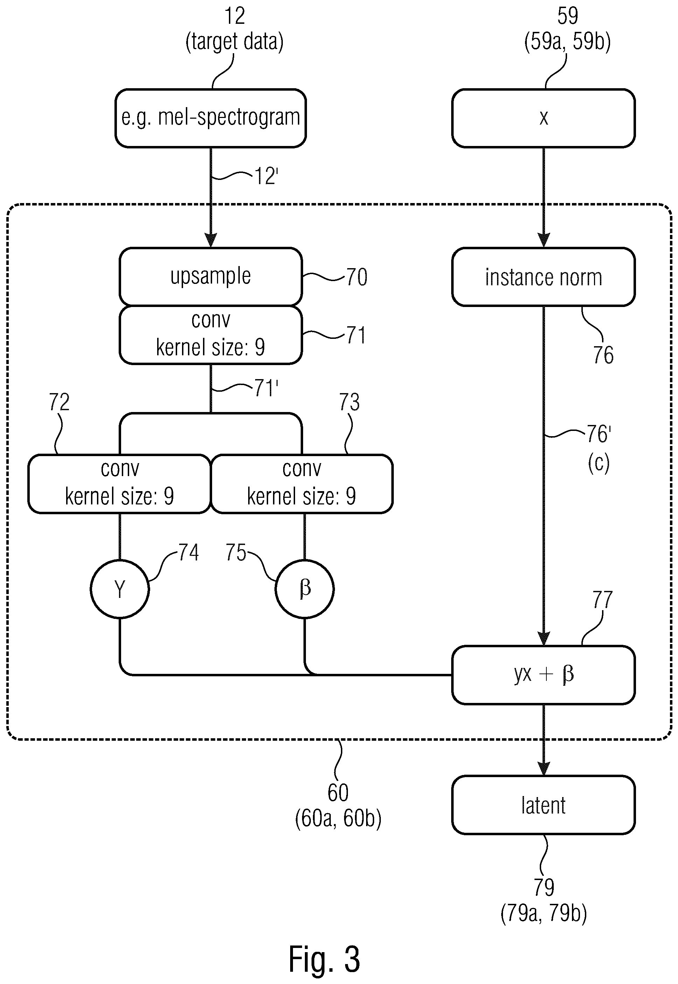

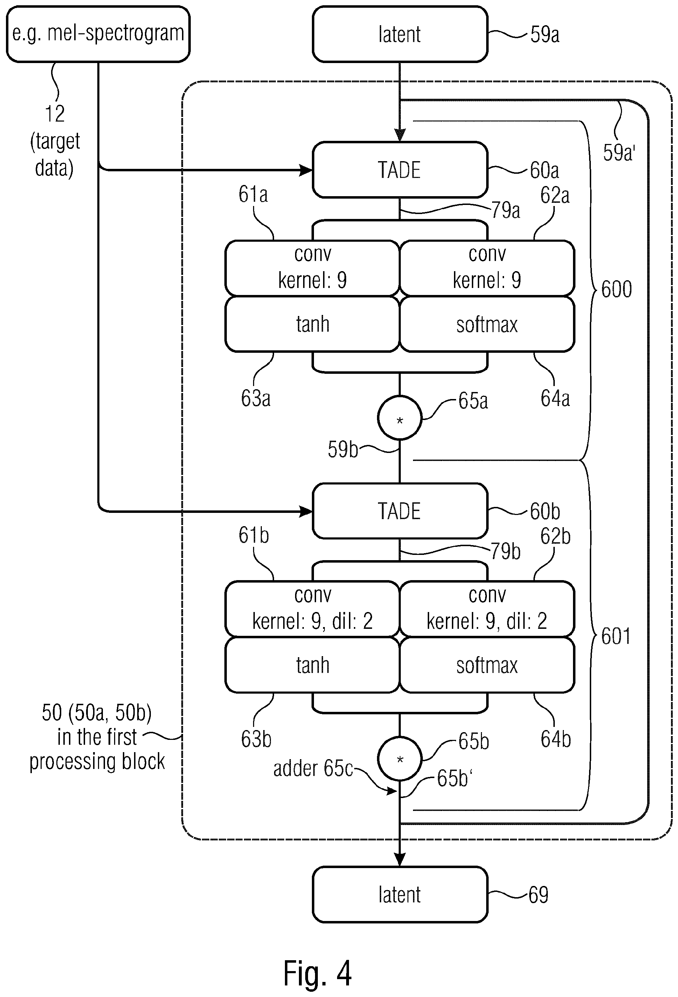

It is in this context that we propose StyleMelGAN (e.g., the audio generator 10), a light-weight neural vocoder, allowing synthesis of high-fidelity speech with low computational complexity. StyleMelGAN is a fully convolutional, feed-forward model that uses Temporal Adaptive DEnormalization, TADE, (e.g., 60a and 60b in Fig. 4, and 60 in Fig. 3) to style (e.g. at 77) a low-dimensional noise vector (e.g. a 128x1 vector) via the acoustic features of the target speech waveform. The architecture allows for highly parallelizable generation, several times faster than real time on both control processing units, CPUs, and graphic processing units, GPUs. For efficient and fast training, we may use a multi-scale spectral reconstruction loss together with an adversarial loss calculated by multiple discriminators (e.g., 132a-132d) evaluating the speech signal 16 in multiple frequency bands and with random windowing (e.g., the windows 105a, 105b, 105c, 105d). MUSHRA and P.800 listening tests show that StyleMelGAN (e.g., the audio generator 10) outperforms known existing neural vocoders in both copy synthesis and TTS scenarios.

The present application proposes, inter alia, a neural vocoder for generating high quality speech 16, which may be based on a generative adversarial network (GAN). The solution, here called StyleMelGAN (and, for example, implemented in the audio generator 10), is a lightweight neural vocoder allowing synthesis of high-quality speech 16 at low computational complexity. StyleMelGAN is a feed-forward, fully convolutional model that uses temporal adaptive denormalization (TADE) for styling (e.g. at block 77) a latent noise representation (e.g. 69) using, for example the mel-spectrogram (12) of the target speech waveform. It allows highly parallelizable generation, which is several times faster than real time on both CPUs and GPUs. For training, it is possible to use multi-scale spectral reconstruction losses followed by adversarial losses. This enables to obtain a model able to synthesize high-quality outputs after less than 2 days of training on a single GPU.

Potential applications and benefits from the invention are as follows:
The invention is applied for Text-to-Speech, and the resulting quality, i.e. the generated speech quality for TTS and copy-synthesis is close to WaveNet and natural speech. It also provides a fast training, such that the model is easy and quick to be re-trained, personalized. It uses less memory, since it is a relatively small neural network model. And finally, the proposed invention provides a benefit in terms of complexity, i.e. it has a very good quality/complexity tradeoff.

The invention can also be applied for speech enhancement, where it can provide a low complexity and robust solution for generating clean speech from noisy one.

The invention can also be applied for speech coding, where it can lower significantly the bitrate by transmitting only the parameters necessary for conditioning the neural vocoder. Also, in this application the lightweight neural vocoder-based solution is suitable for embedded systems, and especially suitable for upcoming (end-)User Equipment (UE) equipped with a GPU or a Neural Processing Unit (NPU).

## Detailed Description of the Embodiments

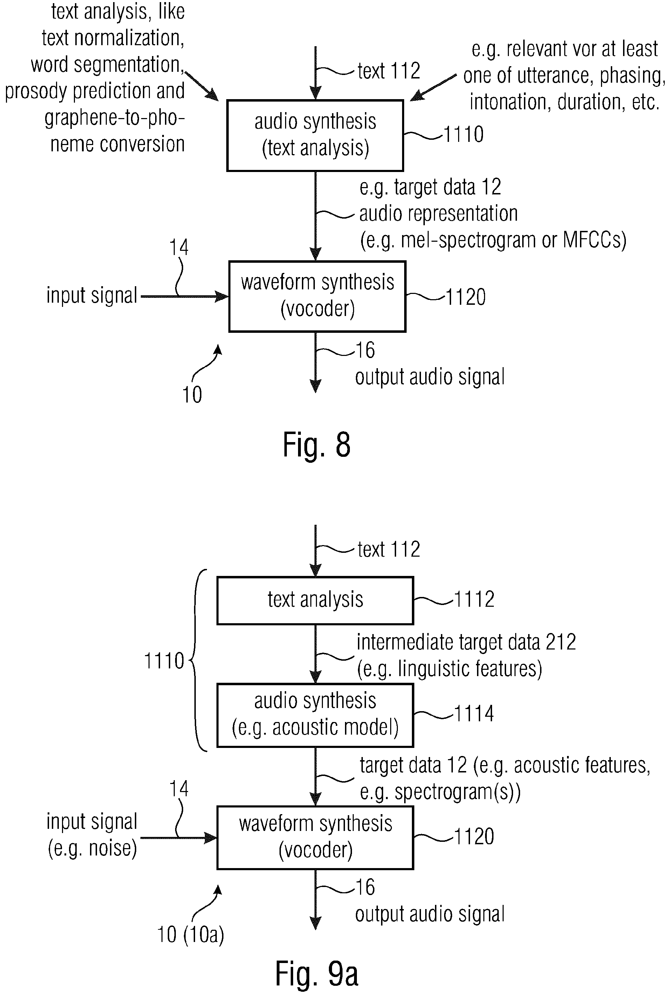

Fig. 8 shows an example of the audio generator 10. The audio generator 10 converts text 112 onto an output audio signal 16. The text 112 may be converted onto target data 12 (see below), which in some examples may be understood as an audio representation (e.g., spectrogram, or more in general spectrograms, MFCCs, like log-spectrogram, or a spectrogram, or MFCCs or a mel-spectrogram, or other acoustic features). The target data 12 is used to condition an input signal 14 (e.g. noise) so as to process the input signal 14 to become audible speech. An audio synthesis block (text analysis block) 1110 may convert the text 112 onto the audio representation (e.g., spectrogram, or more in general spectrograms, MFCCs, like log-spectrogram, or a spectrogram, or MFCCs or a mel-spectrogram, or other acoustic features) e.g. under the conditions set by the target data 12. The audio synthesis block 1110 may be responsible for processing at least one of utterance, phasing, intonation, duration, etc. of speech, for example. The audio synthesis block 1110 (text analysis block) may perform at least one task such as text normalization, word segmentation, prosody prediction and graphene to phoneme conversion. Subsequently, the generated target data 12 may be inputted into a waveform synthesis block 1120 (e.g. vocoder), which may generate the waveform 16 (output audio signal), e.g. from the input signal 14 based on conditions obtained from the target data 12 obtained from the text 112.

It is noted, however, that the block 1110 in some examples is not part of the generator 10, but the block 1110 could be external to the generator 10. In some examples, the block 1110 may be subdivided into multiple sub-blocks (and in some particular cases at least one of the sub-blocks may be part of the generator 10, and at least one of the sub-blocks may be external to the generator 10).

In general terms, the input, which may be text (or other input derived from text) which is inputted to the block 1110 (or the generator 10 in some examples) may be in the form of at least one of:

- text 112 (e.g., ASCII code)
- at least one linguistics feature (e.g. at least one among a phoneme, words prosody, intonation, phrase breaks, and filled pauses, e.g. obtained from a text)
- at least one acoustic feature (e.g. at least one among a log-spectrogram, an MFCC, and a mel-spectrogram, e.g. obtained from a text)

The input may be processed (e.g. by block 1110) to obtain the target data 12. According to different examples, block 1110 may perform processing so as to obtain the target data 12 (derived from text) in the form of at least one of:

- at least one of a character of text or a word
- at least one linguistic feature (e.g. at least one among a phoneme, words prosody, intonation, phrase breaks, and filled pauses, e.g. obtained from a text)
- at least one acoustic feature (e.g. at least one among a log-spectrogram, an MFCC, and a mel-spectrogram, e.g. obtained from a text).

The target data 12 (whether in form of character, linguistic features, or acoustic feature) will be used by the generator 10 (e.g., by the waveform synthesis block, vocoder, 1120) to condition the processing for the input signal 14, thereby generating the output audio signal (acoustic wave).

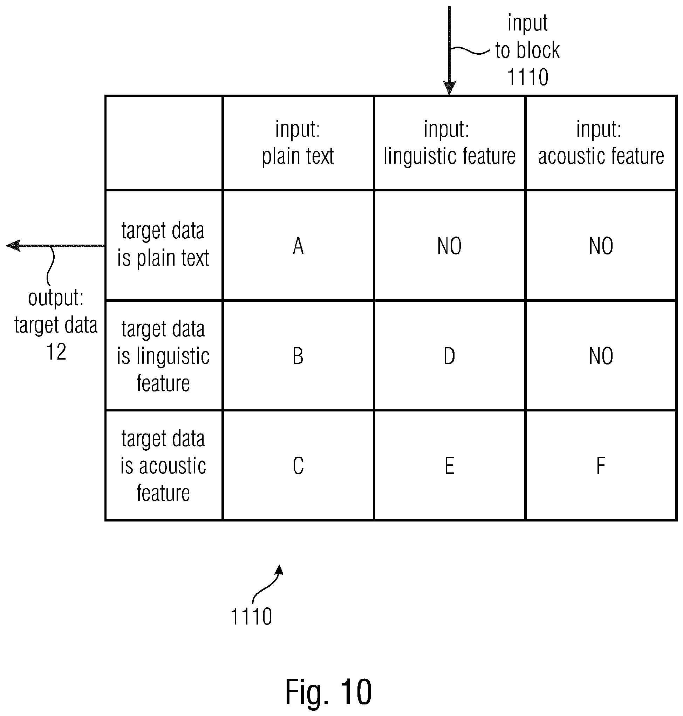

Fig. 10 shows a synoptic table on the several possibilities for instantiating the block 1110:

A) In case A, the input inputted to the block 1110 is plain text 112, and the output (target data 12) from the block 1110 is at least one of a character of text or a word (which is also text). In case A, the block 1110 performs a selection of text 112 to elements of the text 112. Subsequently, the target data 12 (in form of elements of the text 112) will condition the processing to the input signal 14 to obtain the output signal 16 (acoustic wave).

B) In case B, the input inputted to the block 1110 is plain text 112, and the output (target data 12) from the block 1110 comprise at least one linguistic feature, e.g. e.g. a linguistic feature among a phoneme, words prosody, intonation, phrase break, and filled pauses obtained from the text 112, etc. In case B, the block 1110 performs a linguistic analysis to elements of the text 112, thereby obtaining at least one linguistic feature among at least one among phoneme, words prosody, intonation, phrase break, and filled pauses, etc. Subsequently, the target data 12 (in form of at least one among phoneme, words prosody, intonation, phrase break, and filled pauses, etc.) will condition the processing to the input signal 14 to obtain the output signal 16 (acoustic wave).

C) In case C, the input inputted to the block 1110 is plain text 112, and the output (target data 12) from the block 1110 comprise at least one acoustic feature, e.g. one acoustic feature among a log-spectrogram, or an MFCC, and a mel-spectrogram obtained from a text. In case C, the block 1110 performs an acoustic analysis to elements of the text 112, thereby obtaining at least one acoustic feature among a log-spectrogram, or an MFCC, and a mel-spectrogram obtained from the text 112. Subsequently, the target data 12 (e.g. in form of at least one among acoustic feature among a log-spectrogram, MFCC, a mel-spectrogram obtained from the text etc.) will condition the processing to the input signal 14 to obtain the output signal 16 (acoustic wave).

D) In case D, the input inputted to the block 1110 is a linguistic feature (e.g. at least one among phoneme, words prosody, intonation, phrase break, and filled pause), and the output is also a processed linguistic feature (e.g. at least one among phoneme, words prosody, intonation, phrase break, and filled pause). Subsequently, the target data 12 (in form of at least one among phoneme, words prosody, intonation, phrase break, and filled pauses, etc.) will condition the processing to the input signal 14 to obtain the output signal 16 (acoustic wave).

E) In case E, the input inputted to the block 1110 is a linguistic feature (e.g. at least one among phoneme, words prosody, intonation, phrase break, and filled pause), and the output (target data 12) from the block 1110 comprise at least one acoustic feature, e.g. one acoustic feature among a log-spectrogram, or an MFCC, and a mel-spectrogram obtained from a text. In case E, the block 1110 performs an acoustic analysis to elements of the text 112, to obtain at least one acoustic feature among a log-spectrogram, or an MFCC, and a mel-spectrogram. Subsequently, the target data 12 (e.g. in form of at least one among acoustic feature among a log-spectrogram, MFCC, a mel-spectrogram obtained from the text etc.) will condition the processing to the input signal 14 to obtain the output signal 16 (acoustic wave).

F) In case F, the input inputted to the block 1110 is in form of an acoustic feature (e.g. in form of at least one among acoustic feature among a log-spectrogram, MFCC, a mel-spectrogram obtained from the text etc.), and the output (target data 12) is in form of a processed acoustic feature (e.g. in form of at least one among acoustic feature among a log-spectrogram, MFCC, a mel-spectrogram obtained from the text etc.). Subsequently, the target data 12 (e.g. in form of the processed acoustic features, like the at least one among acoustic feature among a log-spectrogram, MFCC, a mel-spectrogram obtained from the text etc.) will condition the processing to the input signal 14 to obtain the output signal 16 (acoustic wave).

Fig. 9a shows an example in which block 1110 includes a sub-block 1112 (text analysis block) which provides intermediate target data 212 and, downstream thereto, a sub-block 1114 (audio synthesis, e.g. using an acoustic model) which generates the target data 12 in the form of acoustic features. Therefore, in Fig. 9a if both the sub-blocks 1112 and 1114 are part of the generator 10, we are in case C. If the sub-block 1112 is not part of the generator 10 but the sub-block 1114 is part of the generator 10, we are in case E.

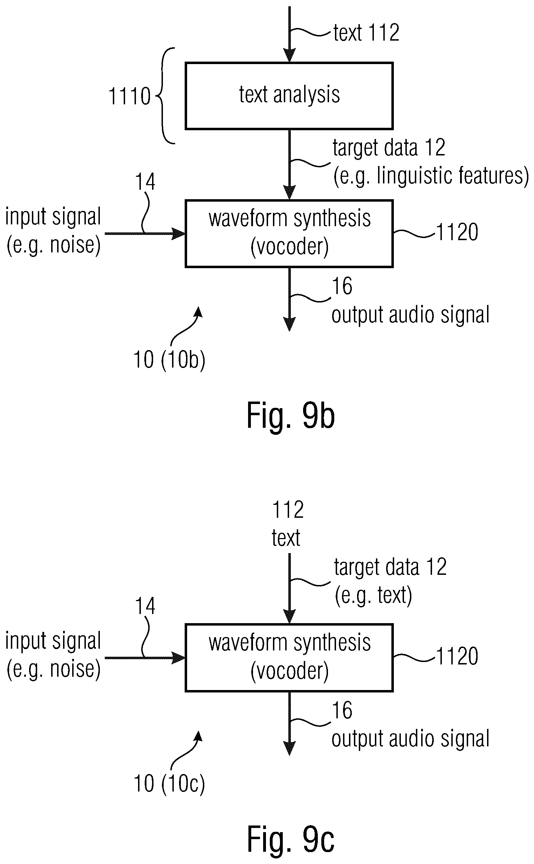

Fig. 9b shows an example in which the block 1110 only performs text analysis and provides target data 12 in the form of linguistic features. Therefore, in Fig. 9b, if the block 1110 is part of the generator 10, we are in case B.

Fig. 9c shows an example in which there is no block 1110, and target data 112 are in the form of linguistic features.

In general, block 1110 (if present) operates to elaborate the text (or other input obtained from text) more and more, in a processing towards a target data which is more elaborated than the input inputted to the block 1110. The block 1110 may also use constraints (e.g. attention function, voice of man/woman, accent, emotional characterization, etc.) which may be absent in the original text. These constraints may be in general provided by the user.

It is noted that, in the cases above and below, the block 1110 (or, if present any of its sub-blocks, such as any of blocks 1112 and 1114) may use a statistical model, e.g. performing text analysis and/or using an acoustic model. In addition or in alternative, the block 1110 (or, if present any of its sub-blocks, such as any of blocks 1112 and 1114) may use a learnable model, e.g. performing text analysis and/or using an acoustic model. The learnable model may be based, for example, on neural networks, Markov chains, etc. In further addition or in further alternative, the block 1110 (or, if present any of its sub-blocks, such as any of blocks 1112 and 1114) may make use of a rules-based algorithm performing text analysis and/or based on an acoustic model.

The block 1110 (or, if present any of its sub-blocks, such as any of blocks 1112 and 1114) may derive the target data deterministically, in some examples. Therefore, it may be that some sub-block(s) are learnable, and other ones are deterministic.

The block 1110 is also referred to as "text analysis block" (e.g. when converting text onto at least one linguistic feature) or "audio synthesis block" (e.g. when converting text or at least one linguistic feature onto at least one acoustic features, such as a spectrogram). Anyway, it is maintained that the target data 12 may be in the form of text, linguistic feature, or acoustic feature according to the embodiments.

Notably, Fig. 10 shows that some combinations of conversions are in general not provided. This because conversions from an elaborated feature towards a simple feature (e.g., from a linguistic feature to text or from an acoustic feature to text or a linguistic feature) is not imagined.

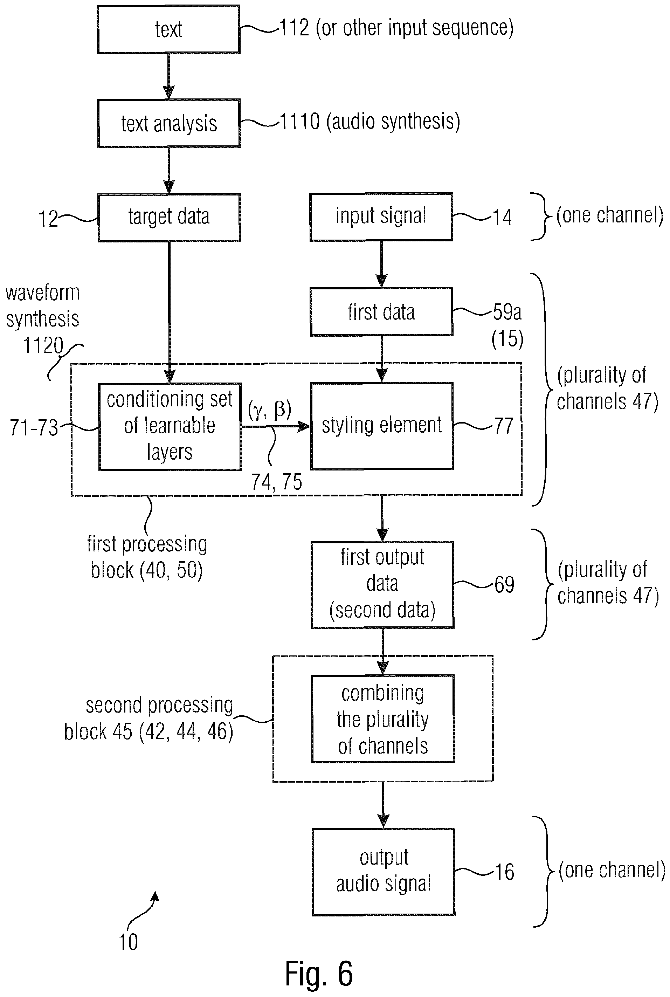

Fig. 6 shows an example of an audio generator 10 which generates (e.g., synthesizes) an audio signal (output signal) 16, e.g. according to StyleMelGAN. In Fig. 6, text 112 is processed e.g. by text analysis block 1110 to obtain target data 12. Subsequently, at the waveform synthesis block 1120, the target data 12 may be used to process an input signal 14 (e.g. noise) to obtain an audible audio signal 16 (acoustic waveform). The obtain target data 12 may derived be derived from a text.

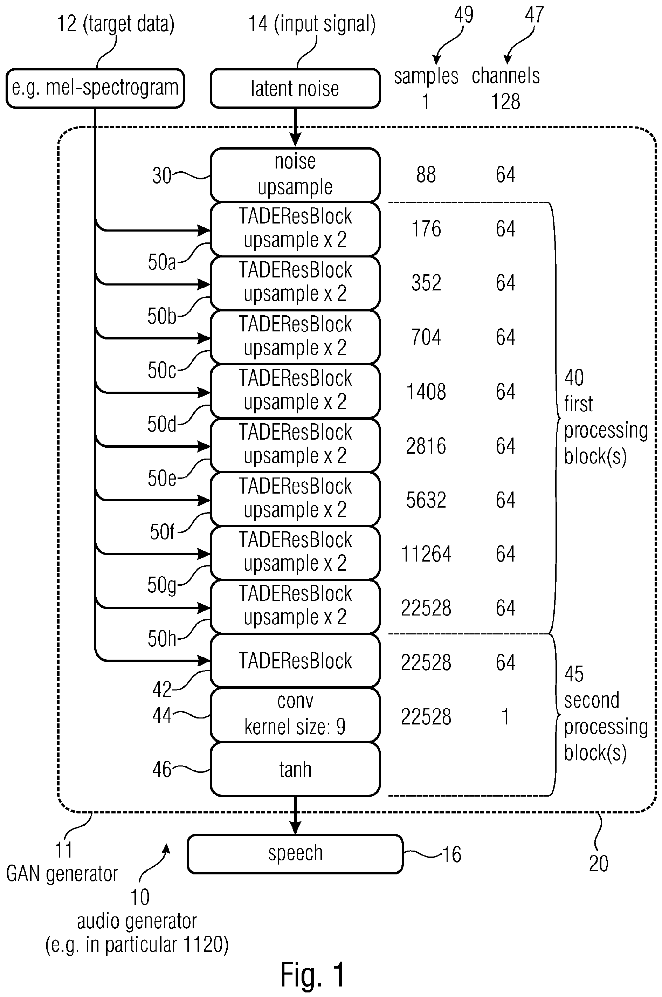

In particular, the output audio signal 16 is generated based on an input signal 14 (also called latent signal and which may be noise, e.g. white noise) and target data 12 (also called "input sequence", and being derived from text), and which may be obtained from the text 112 at block 1110, for example. The target data 12 may, for example, comprise (e.g. be) a spectrogram (e.g., a mel-spectrogram), the mel-spectrogram providing mapping, for example, of a sequence of time samples onto mel scale. In addition or alternatively, the target data 12 may comprise (e.g. be) a bitstream. For example, the target data may be or include text (or more in general be derived from text) which is to be reproduced in audio (e.g., text-to-speech). The target data 12 is to be processed, in order to obtain a speech sound recognizable as natural by a human listener. The input signal 14 may be noise (which as such carries no useful information), e.g. white noise, but, in the generator 10, a noise vector taken from the noise is styled (e.g. at 77) to have a noise vector with the acoustic features conditioned by the target data 12. At the end, the output audio signal 16 will be understood as speech by a human listener. The noise vector 14 may be, like in Fig. 1, a 128x1 vector (one single sample, e.g. time domain samples or frequency domain samples, and 128 channels). Other length of the noise vector 14 could be used in other examples.

The first processing block 50 is shown in Fig. 6. As will be shown (e.g., in Fig. 1) the first processing block 50 may be instantiated by each of a plurality of blocks (in Fig. 1, blocks 50a, 50b, 50c, 50d, 50e, 50f, 50g, 50h). The blocks 50a-50h may be understood as forming one single block 40. It will be shown that in the first processing block 40, 50, a conditioning set of learnable layers (e.g., 71, 72, 73) may be used to process the target data 12 and/or the input signal 14. Accordingly, conditioning feature parameters 74, 75 (also referred to as gamma, $\gamma$, and beta, $\beta$, in Fig. 3) may be obtained, e.g. by convolution, during training. The learnable layers 71-73 may therefore be part of a weight layer of a learning network or, more in general, another learning structure. The first processing block 40, 50 may include at least one styling element 77. The at least one styling element 77 may output the first output data 69. The at least one styling element 77 may apply the conditioning feature parameters 74, 75 to the input signal 14 (latent) or the first data 15 obtained from the input signal 14.

The first output data 69 at each block 50 are in a plurality of channels. The audio generator 10 includes a second processing block 45 (in Fig. 1 shown as including the blocks 42, 44, 46). The second processing block 45 is configured to combine the plurality of channels 47 of the first output data 69 (inputted as second input data or second data), to obtain the output audio signal 16 in one single channel, but in a sequence of samples.

The "channels" are not to be understood in the context of stereo sound, but in the context of neural networks (e.g. convolutional neural networks). For example, the input signal (e.g. latent noise) 14 may be in 128 channels (in the representation in the time domain), since a sequence of channels are provided. For example, when the signal has 176 samples and 64 channels, it may be understood as a matrix of 176 columns and 64 rows, while when the signal has 352 samples and 64 channels, it may be understood as a matrix of 352 columns and 64 rows (other schematizations are possible). Therefore, the generated audio signal 16 (which in Fig. 1 results in a 1x22528 row matrix, where 22528 can be substituted by another other number) may be understood as a mono signal. In case stereo signals are to be generated, then the disclosed technique is simply to be repeated for each stereo channel, so as to obtain multiple audio signals 16 which are subsequently mixed.

The at least the original input signal 14 and/or the generated speech 16 may be a vector. To the contrary, the output of each the blocks 30 and 50a-50h, 42, 44 has in general a different dimensionality. The first data may have a first dimension or at least one dimension lower than that of the audio signal. The first data may have a total number of samples across all dimensions lower than the audio signal. The first data may have one dimension lower than the audio signal but a number of channels greater than the audio signal. At each block 30 and 50a-50h, the signal, evolving from noise 14 towards becoming speech 16, may be upsampled. For example, at the upsampling block 30 before the first block 50a among the blocks 50a-50h, an 88-times upsampling is performed. An example of upsampling may include, for example, the following sequence: 1) repetition of same value, 2) insert zeros, 3) another repeat or insert zero + linear filtering, etc.

The generated audio signal 16 may generally be a single-channel signal (e.g. 1x22528). In case multiple audio channels are necessary (e.g., for a stereo sound playback) then the claimed procedure shall be in principle iterated multiple times.

Analogously, also the target data 12 can be, in principle, in one single channel (e.g. if it is text or more in general if it is derived from text, like in case A, or like in Fig. 9c) or in multiple channels (e.g. in spectrograms, e.g. mel-spectrograms, e.g. derived from text, e.g. when in cases C, E, F). In any case, it may be upsampled (e.g. by a factor of two, a power of 2, a multiple of 2, or a value greater than 2) to adapt to the dimensions of the signal (59a, 15, 69) evolving along the subsequent layers (50a-50h, 42), e.g. to obtain the conditioning feature parameters 74, 75 in dimensions adapted to the dimensions of the signal.

When the first processing block 50 is instantiated in e.g. at least multiple blocks 50a-50h, the number of channels may, for example, remain the same for the multiple blocks 50a-50h. The first data may have a first dimension or at least one dimension lower than that of the audio signal. The first data may have a total number of samples across all dimensions lower than the audio signal. The first data may have one dimension lower than the audio signal but a number of channels greater than the audio signal.

The signal at the subsequent blocks may have different dimensions from each other. For example, the sample may be upsampled more and more times to arrive, for example, from 88 samples to 22,528 samples at the last block 50h. Analogously, also the target data 12 are upsampled at each processing block 50. Accordingly, the conditioning features parameters 74, 75 can be adapted to the number of samples of the signal to be processed. Accordingly, se-mantic information provided by the target data 12 is not lost in subsequent layers 50a-50h.

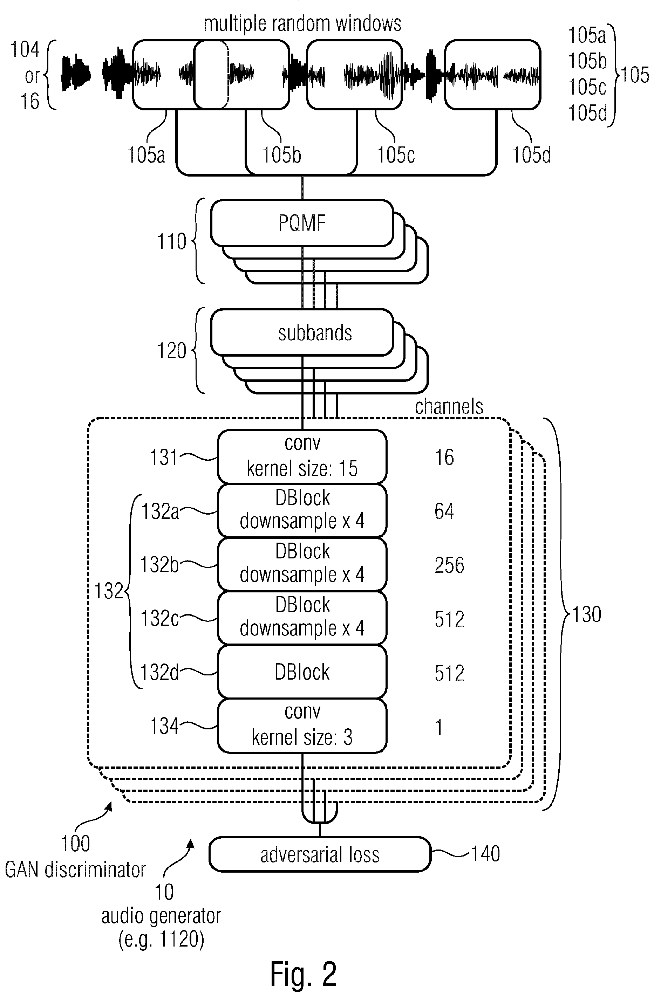

It is to be understood that examples may be performed according to the paradigms of generative adversarial networks (GANs). A GAN includes a GAN generator 11 (Fig. 1) and a GAN discriminator 100 (Fig. 2), which may be also understood to be part of the waveform synthesis block 1120. The GAN generator 11 tries to generate an audio signal 16, which is as close as possible to a real signal. The GAN discriminator 100 shall recognize whether the generated audio signal is real (like the real audio signal 104 in Fig. 2) or fake (like the generated audio signal 16). Both the GAN generator 11 and the GAN discriminator 100 may be obtained as neural networks. The GAN generator 11 shall minimize the losses (e.g., through the method of the gradients or other methods), and update the conditioning features parameters 74, 75 by taking into account the results at the GAN discriminator 100. The GAN discriminator 100 shall reduce its own discriminatory loss (e.g., through the method of gradients or other methods) and update its own internal parameters. Accordingly, the GAN generator 11 is trained to provide better and better audio signals 16, while the GAN discriminator 100 is trained to recognize real signals 16 from the fake audio signals generated by the GAN generator 11. In general terms, it may be understood that the GAN generator 11 may include the functionalities of the generator 10, without at least the functionalities of the GAN discriminator 100. Therefore, in most of the foregoing, it may be understood that the GAN generator 11 and the audio generator 10 may have more or less the same features, apart from those of the discriminator 100. The audio generator 10 may include the discriminator 100 as an internal component. Therefore, the GAN generator 11 and the GAN discriminator 100 may concur in constituting the audio generator 10. In examples where the GAN discriminator 100 is not present, the audio generator 10 can be constituted uniquely by the GAN generator 11.

As explained by the wording "conditioning set of learnable layers", the audio generator 10 may be obtained according to the paradigms of conditional GANs, e.g. based on conditional information. For example, conditional information may be constituted by target data (or up-sampled version thereof) 12 from which the conditioning set of layers 71-73 (weight layer) are trained and the conditioning feature parameters 74, 75 are obtained. Therefore, the styling element 77 is conditioned by the learnable layers 71-73.

The examples may be based on convolutional neural networks. For example, a little matrix (e.g., filter or kernel), which could be a 3x3 matrix (or a 4x4 matrix, etc.), is convolved (convoluted) along a bigger matrix (e.g., the channel x samples latent or input signal and/or the spectrogram and/or the spectrogram or upsampled spectrogram or more in general the target data 12), e.g. implying a combination (e.g., multiplication and sum of the products; dot product, etc.) between the elements of the filter (kernel) and the elements of the bigger matrix (activation map, or activation signal). During training, the elements of the filter (kernel) are obtained (learnt) which are those that minimize the losses. During inference, the elements of the filter (kernel) are used which have been obtained during training. Examples of convolutions are at blocks 71-73, 61a, 61b, 62a, 62b (see below). Where a block is conditional (e.g., block 60 of Fig. 3), then the convolution is not necessarily applied to the signal evolving from the input signal 14 towards the audio signal 16 through the intermediate signals 59a (15), 69, etc., but may be applied to the target signal 14. In other cases (e.g. at blocks 61a, 61b, 62a, 62b) the convolution may be not conditional, and may for example be directly applied to the signal 59a (15), 69, etc., evolving from the input signal 14 towards the audio signal 16. As can be seen from Figs. 3 and 4, both conditional and no-conditional convolutions may be performed.

It is possible to have, in some examples, activation functions downstream to the convolution (ReLu, TanH, softmax, etc.), which may be different in accordance to the intended effect. ReLu may map the maximum between 0 and the value obtained at the convolution (in practice, it maintains the same value if it is positive, and outputs 0 in case of negative value). Leaky ReLu may output x if x>0, and 0.1*x if x≤0, x being the value obtained by convolution (instead of 0.1 another value, such as a predetermined value within $0.1 \pm 0.05$, may be used in some examples). TanH (which may be implemented, for example, at block 63a and/or 63b) may provide the hyperbolic tangent of the value obtained at the convolution, e.g.

$$TanH(x) = (e^x - e^{-x})/(e^x + e^{-x}),$$

with x being the value obtained at the convolution (e.g. at block 61a and/or 61b). Softmax (e.g. applied, for example, at block 64a and/or 64b) may apply the exponential to each element of the elements of the result of the convolution (e.g., as obtained in block 62a and/or 62b), and normalize it by dividing by the sum of the exponentials. Softmax (e.g. at 64a and/or 64b) may provide a probability distribution for the entries which are in the matrix which results from the convolution (e.g. as provided at 62a and/or 62b). After the application of the activation function, a pooling step may be performed (not shown in the figures) in some examples, but in other examples it may be avoided.

Fig. 4 shows that it is also possible to have a softmax-gated TanH function, e.g. by multiplying (e.g. at 65a and/or 65b) the result of the TanH function (e.g. obtained at 63a and/or 63b) with the result of the softmax function (e.g. obtain at 64a and/or 64b).

Multiple layers of convolutions (e.g. a conditioning set of learnable layers) may be one after another one and/or in parallel to each other, so as to increase the efficiency. If the application of the activation function and/or the pooling are provided, they may also be repeated in different layers (or maybe different activation functions may be applied to different layers, for example).

The input signal 14 (e.g. noise) is processed, at different steps, to become the generated audio signal 16 (e.g. under the conditions set by the conditioning sets of learnable layers 71-73, and on the parameters 74, 75 learnt by the conditioning sets of learnable layers 71-73. Therefore, the input signal is to be understood as evolving in a direction of processing (from 14 to 16 in Fig. 6) towards becoming the generated audio signal 16 (e.g. speech). The conditions will be substantially generated based on the target signal 12, and on the training (so as to arrive at the most preferable set of parameters 74, 75).

It is also noted that the multiple channels of the input signal (or any of its evolutions) may be considered to have a set of learnable layers and a styling element associated thereto. For example, each row of the matrixes 74 and 75 is associated to a particular channel of the input signal (or one of its evolutions), and is therefore obtained from a particular learnable layer associated to the particular channel. Analogously, the styling element 77 may be considered to be formed by a multiplicity of styling elements (each for each row of the input signal x, c, 12, 76, 76', 59, 59a, 59b, etc.).

Fig. 1 shows an example of the audio generator 10 (which may embody the audio generator 10 of Fig. 6), and which may also comprise (e.g. be) a GAN generator 11. Notably, Fig. 1 only shows elements of the waveform synthesis block 1120, since the target data 12 are already converted from the text 112. The target data 12, e.g. obtained from text, is indicated as mel-spectrogram, the input signal 14 may be a latent noise, and the output of the signal 16 may be speech (other examples are notwithstanding possible, as explained above). As can be seen, the input signal 14 has only one sample and 128 channels (other numbers can be defined). The noise vector 14 may be obtained in a vector with 128 channels (but other numbers are possible) and may have a zero-mean normal distribution. The noise vector may follow the formula

$$z \sim \mathcal{N}(0, I_{128}).$$

The noise vector may be a random noise of dimension 128 with mean 0 generated, and with an autocorrelation matrix (square 128x128) is equal to the identity I (different choice may be made). Hence, in examples the generated noise can be completely decorrelated between the channels and of variance 1 (energy). $\mathcal{N}(0, I_{128})$ may be generated at every 22528 generated samples (or other numbers may be chosen for different examples); the dimension may therefore be 1 in the time axis and 128 in the channel axis.

It will be shown that the noise vector 14 is step-by-step processed (e.g., at blocks 50a-50h, 42, 44, 46, etc.), so as to evolve from, e.g., noise 14 to, e.g., speech 16 (the evolving signal will be indicated, for example, with different signals 15, 59a, x, c, 76', 79, 79a, 59b, 79b, 69, etc.).

At block 30, the input signal (noise) 14 may be upsampled to have 88 samples (different numbers are possible) and 64 channels (different numbers are possible).

As can be seen, eight processing blocks 50a, 50b, 50c, 50d, 50e, 50f, 50g, 50h (altogether embodying the first processing block 50 of Fig. 6) may increase the number of samples by performing an upsampling (e.g., maximum 2-upsampling). The number of channels may always remain the same (e.g., 64) along blocks 50a, 50b, 50c, 50d, 50e, 50f, 50g, 50h. The samples may be, for example, the number of samples per second (or other time unit): we may obtain, at the output of block 50h, sound at more than 22 kHz.

Each of the blocks 50a-50h (50) can also be a TADEResBlock (residual block in the context of TADE, Temporal Adaptive DEnormalization). Notably, each block 50a-50h may be conditioned by the target data 12 (e.g., text feature, linguistic feature, or acoustic feature, such as a mel-spectrogram).

At a second processing block 45 (Figs. 1 and 6), only one single channel may be obtained, and multiple samples are obtained in one single dimension. As can be seen, another TADEResBlock 42 (further to blocks 50a-50h) is used (which reduces to one single channel). Then, a convolution layer 44 and an activation function (which may be TanH 46, for example) may be performed. After that, the speech 16 is obtained (and, possibly, stored, rendered, encoded, etc.).

At least one of the blocks 50a-50h (or each of them, in particular examples) may be, for example, a residual block. A residual block operates a prediction only to a residual component of the signal evolving from the input signal 14 (e.g. noise) to the output audio signal 16. The residual signal is only a part (residual component) of the main signal. For example, multiple residual signals may be added to each other, to obtain the final output audio signal 16.

Fig. 4 shows an example of one of the blocks 50a-50h (50). As can be seen, each block 50 is inputted with a first data 59a, which is either the input signal 14, (or the upsampled version thereof, such as that output by the upsampling block 30) or the output from a preceding block. For example, the block 50b may be inputted with the output of block 50a; the block 50c may be inputted with the output of block 50b, and so on.

In Fig. 4, it is therefore possible to see that the first data 59a provided to the block 50 (50a-50h) is processed and its output is the output signal 69 (which will be provided as input to the subsequent block). As indicated by the line 59a', a main component of the first data 59a inputted to the first processing block 50a-50h (50) actually bypasses most of the processing of the first processing block 50a-50h (50). For example, blocks 60a, 61a, 62a, 63a, 65a, 60b, 61b, 62b, 63b, 64b, and 65b are bypassed by the bypassing line 59a'. The first data 59a will subsequently add to a residual portion 64b' at an adder 65c (which is indicated in Fig. 4, but not shown). This bypassing line 59a' and the addition at the adder 65c may be understood as instantiating the fact that each block 50 (50a-50h) processes operations to residual signals, which are then added to the main portion of the signal. Therefore, each of the blocks 50a-50h can be considered a residual block.

Notably, the addition at adder 65c does not necessarily need to be performed within the residual block 50 (50a-50h). A single addition of a plurality of residual signals 65b' (each outputted by each of residual blocks 50a-50h) can be performed (e.g., at an adder block in the second processing block 45, for example). Accordingly, the different residual blocks 50a-50h may operate in parallel with each other.

In the example of Fig. 4, each block 50 may repeat its convolution layers twice (e.g., first at replica 600, including at least one of blocks 60a, 61a, 62a, 63a, 64a, 65a, and obtaining signal 59b; then, at replica 601, including at least one of blocks 60b, 61b, 62b, 63b, 64b, 65b, and obtaining signal 65b', which may be added to the main component 59a').

For each replica (600, 601), a conditioning set of learnable layers 71-73 and a styling element 77 is applied (e.g. twice for each block 50) to the signal evolving from the input signal 16 to the audio output signal 16. A first temporal adaptive denormalization (TADE) is performed at TADE block 60a to the first data 59a at the first replica 600. The TADE block 60a performs a modulation of the first data 59a (input signal or, e.g., processed noise) under the conditions set out by the target data 12. In the first TADE block 60a, an upsampling of the target data 12 may be performed at upsampling block 70, to obtain an upsampled version 12' of the target data 12. The upsampling may be obtained through non-linear interpolation, e.g. using a factor of 2, a power of 2, a multiple of two, or another value greater than 2. Accordingly, in some examples it is possible to have that the spectrogram 12' has the same dimensions (e.g. conforms to) the signal (76, 76', x, c, 59, 59a, 59b, etc.) to be conditioned by the spectrogram. An application of stylistic information to the processed noise (first data) (76, 76', x, c, 59, 59a, 59b, etc.) may be performed at block 77 (styling element). In a subsequent replica 601, another TADE block 60b may be applied to the output 59b of the first replica 600. An example of the TADE block 60 (60a, 60b) is provided in Fig. 3 (see also below). After having modulated the first data 59a, convolutions 61a and 62a are carried out. Subsequently, activation functions TanH and softmax (e.g. constituting the softmax-gated TanH function) are also performed (63a, 64a). The outputs of the activation functions 63a and 64a are multiplied at multiplier block 65a (e.g. to instantiate the gating), to obtain a result 59b. In case of the use of two different replicas 600 and 601 (or in case of the use of more than two replicas), the passages of blocks 60a, 61a, 62a, 63a, 64a, 65a, are repeated.

In examples, the first and second convolutions at 61b and 62b, respectively downstream to the TADE block 60a and 60b, may be performed at the same number of elements in the kernel (e.g., 9, e.g., 3x3). However, the second convolutions 61b and 62b may have a dilation factor of 2. In examples, the maximum dilation factor for the convolutions may be 2 (two).

Fig. 3 shows an example of a TADE block 60 (60a, 60b). As can be seen, the target data 12 may be upsampled, e.g. so as to conform to the input signal (or a signal evolving therefrom, such as 59, 59a, 76', also called latent signal or activation signal). Here, convolutions 71, 72, 73 may be performed (an intermediate value of the target data 12 is indicated with 71'), to obtain the parameters $\gamma$ (gamma, 74) and $\beta$ (beta, 75). The convolution at any of 71, 72, 73 may also require a rectified linear unit, ReLu, or rectify a leaky rectified linear unit, leaky ReLu. The parameters $\gamma$ and $\beta$ may have the same dimension of the activation signal (the signal being processed to evolve from the input signal 14 to the generated audio signal 16, which is here represented as x, 59, or 76' when in normalized form). Therefore, when the activation signal (x, 59, 76') has two dimensions, also $\gamma$ and $\beta$ (74 and 75) have two dimensions, and each of them is superimposable to the activation signal (the length and the width of $\gamma$ and $\beta$ may be the same of the length and the width of the activation signal). At the stylistic element 77, the conditioning feature parameters 74 and 75 are applied to the activation signal (which is the first data 59a or the 59b output by the multiplier 65a). It is to be noted, however, that the activation signal 76' may be a normalized version (10 at instance norm block 76) of the first data 59, 59a, 59b (15). It is also to be noted that the formula shown in stylistic element 77 ($\gamma x + \beta$) may be an element-by-element product, and not a convolutional product or a dot product (and in fact γx+β is also indicated as $x \odot \gamma + \beta$, where $\odot$ indicates elementwise multiplication).

After stylistic element 77, the signal is output. The convolutions 72 and 73 have not necessarily activation function downstream of them. It is also noted that the parameter γ (74) may be understood as a variance and β (75) as a bias. Also, block 42 of Fig. 1 may be instantiated as block 50 of Fig. 3. Then, for example, a convolutional layer 44 will reduce the number of channels to 1 and, after that, a TanH 56 is performed to obtain speech 16.

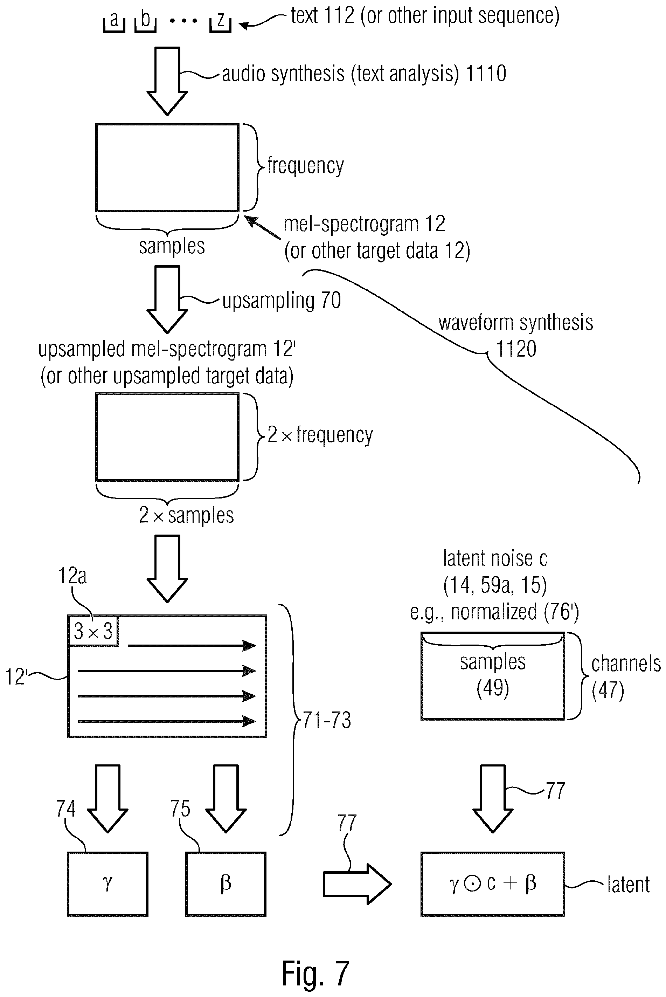

Fig. 7 shows an example of the evolution, in one of the replica 600 and 601 of one of blocks 50a-50h.

the target data 14 (e.g. mel-spectrogram); and

the latent noise c (12), also indicated with 59a or as signal evolving from the input signal 12 towards the generated audio signal 16.

Notably, 61a, 61b62a, 62b may be (or be part of) a set of learnable layer configured to process data derived from the first data (e.g., in turn, from the input signal 14) using an activation function (e.g. 63a, 64a, 63b, 64b) which is a gated activation function (second activation function). This set of learnable layers may consist of one or two or even more convolutional layers. The second activation function may be a gated activation function (e.g. TanH and softmax). This feature may combine with the fact that the first activation function (for obtaining the first convoluted data 71') is a ReLu or a leaky ReLu.

The following procedure (or at least one of its steps) may be performed:

- From an input, such as text 112 (e.g. American Standard Code for Information Interchange, ASCII, code, or another type of code) a target data 12 (e.g. a text feature, a linguistic feature, or an acoustic feature, such as a mel-spectrogram) is generated (different types of target data may be used).
- The target data (e.g. spectrogram) 12 is subjected to at least one of the following steps:

  - Upsampled at upsampling block 70, to obtained an upsampled spectrogram 12';
  - At convolutional layers 71-73 (part of a weight layer), convolutions are performed (e.g. a kernel 12a in is convolved along the upsampled spectrogram 12');
  - γ (74) and β (75) are obtained (learnt);
  - γ (74) and β (75) are applied (e.g. by convolution) to the latent signal 59a (15), evolving from the input signal 14 and the generated audio signal 16.

## TTS

Text to speech (TTS) (e.g. as performed using block 1110) aims to synthesize intelligible and natural sounded speech 16 given a text 112. It could have broad applications in the industry, especially for machine-to-human communication.

The inventive audio generator 10 includes different components, among of them the vocoder 1120, in the last stage and includes mainly block(s) for converting text features, linguistic features or acoustic features in audio waveform 16.

In particular, at block 1110 the text 112 (input) may be analyzed and linguistic features may be extracted from the text 112, e.g. by a text analysis module (sub-block) 1112, as shown in Fig. 9a. Text analysis may include, e.g., multiple tasks like text normalization, word segmentation, prosody prediction and graphene to phoneme (see also Fig. 8). These linguistics features (which may play the role of intermediate target data 212) are then converted, e.g. through an acoustic model (e.g. by sub-block 1114), to acoustics features, like MFCCs, fundamental frequency, mel-spectrogram for example, or a combinations of those, which may constitute the target data 12 of Figs. 1 and 3-8.

It is worth noting that this pipeline can be replaced by end-to-end processing e.g. through the introduction of DNNs. For example, it is possible to condition the neural Vocoder 1120 directly from linguistic features (e.g. in cases B and D of Fig. 10), or an acoustic model could directly process characters bypassing the test analysis stage (the sub-block 1114 in Fig. 9a being not used). For example, some end-to-end models like Tacotron 1 and 2 may be used in block 1110 to simplify text analysis modules and directly take character/phoneme sequences as input sequence, e.g. outputting as acoustic features (target data 12) e.g. in the form of mel-spectrograms.

The current solution can be employed as a TTS system (i.e. including both blocks 1110 and 1120), wherein the target data 12 may include, in some examples, a stream of information or speech representation derived from the text 112. The representation could be for example characters or phonemes derived from a text 112,that means usual inputs of the text analysis block 1110. In this case, a pre-conditioned (pre-conditioning) learnable layer may be used for block 1110 e.g. for extracting acoustics features or conditioning features appropriate (target data 12) for the neural vocoder (e.g. block 1120). This pre-conditioning layer 1110 may use deep neural networks (DNNs) like an encoder-attention-decoder architecture to map characters or phonemes directly to acoustic features. Alternatively, the representation (target data) 12 can be or include linguistics features, that means phonemes associated with information like prosody, intonation, pauses, etc. In this case, the pre-conditioned learnable layer 1110 can be an acoustic model mapping the linguistics features to acoustics features based on statistical models such as Hidden Markov model (HMM), deep neural network (DNN) or recurrent neural network (RNN). Finally, the target data 12 could include directly acoustics features derived from the text 112, which may be used as conditioning features e.g. after a learnable or a deterministic pre-conditioning layer 1110. In an extreme case (e.g. in case F of Fig. 10), the acoustic features in the target data 12 can be used directly as the conditioning features and any pre-conditioning layer bypassed.

By virtue of the above, the audio synthesis block 1110 (text analysis block) may be deterministic in some examples, but may be obtained through at least one learnable layer in other cases.

In examples, the target data 12 may include acoustic features like log-spectrogram, or a spectrogram, or MFCCs or a mel-spectrogram obtained from a text 112.

In alternative, the target data 12 may include linguistics features like phonemes, words prosody, intonation, phrase breaks, or filled pauses obtained from a text.

The target data may be derived from a text using at least one of statistical models, learnable models or rules-based algorithm, which may include a text analysis and/or an acoustic model.

In general terms, therefore, the audio synthesis block 1110 which outputs the target data 12 from the input (e.g. text), such as the text 112 (so that the target data 12 are derived from the text 112), can be either a deterministic block or a learnable block.

In general terms, the target data 12 may have multiple channels, while the text 112 (from which the target data 12 derive) may have one single channel.

Fig. 9a shows an example of generator 10a (which can be an example of the generator 10) in which the target data 12 comprise at least one of the acoustic features like log-spectrogram, or a spectrogram, or MFCCs or a mel-spectrogram obtained from the text 112. Here, the block 1110 includes a text analysis block 1112 which provides intermediate target data 212 which may include at least one of the linguistic features like phonemes, words prosody, intonation, phrase breaks, or filled pauses obtained from the text 112. Subsequently, an audio synthesis block 1114 (e.g. using an acoustic model) may generate the target data 12 as at least one of acoustic features like log-spectrum, or a spectrogram, or MFCCs or mel-spectrogram obtained from the text 112.

After that, the waveform synthesis block 1120 (which can be any of the waveform synthesis blocks discussed above) may be used to generate an output audio signal 16.

Fig. 9b shows an example of a generator 10b (which may be an example of the generator 10) in which the target data 12 comprise at least one of linguistics features like phonemes, words prosody, intonation, phrase breaks, or filled pauses obtained from text 112. A waveform synthesis (e.g. vocoder 1120) can be used to output an audio signal 16. The waveform synthesis block 1120 can be any of those described in the Figs. 1-8 discussed above. In this case, for example, the target data can be directly ingested to the conditional set of learnable layers 71-73 to obtain $\gamma$ and $\beta$ (74 and 75).

In Fig. 9c it is shown an example of a generator 10c (which may be an example of any generators 10 of Figs. 1-8) in which text 112 is used directly as target data. As, the target data 12 comprise at least one of characters or words obtained from the text 112. The waveform synthesis block 1120 may be any of the examples discussed above.

In general terms, any of the audio generators above, (in the particular any of the text analysis blocks 1110 (e.g. any of Figs. 8 or 9a-9c) may derive the target data from a text using at least one of statistical models, learnable models or rules-based algorithm, consisting of a text analysis and/or an acoustic model.

In some examples, the target data 12 may be obtained deterministically by block 1120. In other examples, the target data 12 may be obtained non-deterministically, and block 1110 may be a learnable layer or a plurality of learnable layers.

## GAN discriminator

The GAN discriminator 100 of Fig. 2 may be used during training for obtaining, for example, the parameters 74 and 75 to be applied to the input signal 12 (or a processed and/or normalized version thereof). The training may be performed before inference, and the parameters 74 and 75 may be, for example, stored in a non-transitory memory and used subsequently (however, in some examples it is also possible that the parameters 74 or 75 are calculated on line).

The GAN discriminator 100 has the role of learning how to recognize the generated audio signals (e.g., audio signal 16 synthesized as discussed above) from real input signals (e.g. real speech) 104. Therefore, the role of the GAN discriminator 100 is mainly exerted during training (e.g. for learning parameters 72 and 73) and is seen in counter position of the role of the GAN generator 11 (which may be seen as the audio generator 10 without the GAN discriminator 100).

In general terms, the GAN discriminator 100 may be input by both audio signal 16 synthesized generated by the GAN generator 10, and real audio signal (e.g., real speech) 104 acquired e.g., through a microphone, and process the signals to obtain a metric (e.g., loss) which is to be minimized. The real audio signal 104 can also be considered a reference audio signal. During training, operations like those explained above for synthesizing speech 16 may be repeated, e.g.

multiple times, so as to obtain the parameters 74 and 75, for example.

In examples, instead of analyzing the whole reference audio signal 104 and/or the whole generated audio signal 16, it is possible to only analyze a part thereof (e.g. a portion, a slice, a window, etc.). Signal portions generated in random windows (105a-105d) sampled from the generated audio signal 16 and from the reference audio signal 104 are obtained. For example random window functions can be used, so that it is not a priori pre-defined which window 105a, 105b, 105c, 105d will be used. Also the number of windows is not necessarily four, at may vary.

Within the windows (105a-105d), a PQMF (Quadrature Mirror Filter-bank (PQMF) 110 may be applied. Hence, subbands 120 are obtained. Accordingly, a decomposition (110) of the representation of the generated audio signal (16) or the representation of the reference audio signal (104) is obtained.

An evaluation block 130 may be used to perform the evaluations. Multiple evaluators 132a, 132b, 132c, 132d (complexively indicated with 132) may be used (different number may be used). In general, each window 105a, 105b, 105c, 105d may be input to a respective evaluator 132a, 132b, 132c, 132d. Sampling of the random window (105a-105d) may be repeated multiple times for each evaluator (132a-132d). In examples, the number of times the random window (105a-105d) is sampled for each evaluator (132a-132d) may be proportional to the length of the representation of the generated audio signal or the representation of the reference audio signal (104). Accordingly, each of the evaluators (132a-132d) may receive as input one or several portions (105a-105d) of the representation of the generated audio signal (16) or the representation of the reference audio signal (104).

Each evaluator 132a-132d may be a neural network itself. Each evaluator 132a-132d may, in particular, follow the paradigms of convolutional neutral networks. Each evaluator 132a-132d may be a residual evaluator. Each evaluator 132a-132d may have parameters (e.g. weights) which are adapted during training (e.g., in a manner similar to one of those explained above).

As shown in Fig. 2, each evaluator 132a-132d also performs a downsampling (e.g., by 4 or by another downsampling ratio). The number of channels increase for each evaluator 132a-132d (e.g., by 4, or in some examples by a number which is the same of the downsampling ratio).

Upstream and/or downstream to the evaluators, convolutional layers 131 and/or 134 may be provided. An upstream convolutional layer 131 may have, for example, a kernel with dimension 15 (e.g., 5x3 or 3x5). A downstream convolutional layer 134 may have, for example, a kernel with dimension 3 (e.g., 3x3).

During training, a loss function (adversarial loss) 140 may be optimized. The loss function 140 may include a fixed metric (e.g. obtained during a pretraining step) between a generated audio signal (16) and a reference audio signal (104). The fixed metric may be obtained by calculating one or several spectral distortions between the generated audio signal (16) and the reference audio signal (104). The distortion may be measured by keeping into account:

- magnitude or log-magnitude of the spectral representation of the generated audio signal (16) and the reference audio signal (104), and/or
- different time or frequency resolutions.

In examples, the adversarial loss may be obtained by randomly supplying and evaluating a representation of the generated audio signal (16) or a representation of the reference audio signal (104) by one or more evaluators (132). The evaluation may comprise classifying the supplied audio signal (16, 132) into a predetermined number of classes indicating a pretrained classification level of naturalness of the audio signal (14, 16). The predetermined number of classes may be, for example, "REAL" vs "FAKE".

Examples of losses may be obtained as

$$\mathcal{L}(\mathrm{D}; \mathrm{G}) = \mathbf{E}_{\mathrm{x,z}} \left[ \mathrm{ReLU}(1 - \mathrm{D}(\mathrm{x})) + \mathrm{ReLU}\left(1 + \mathrm{D}\big(\mathrm{G}(\mathrm{z}; \mathrm{s})\big)\right) \right],$$

where:

x is the real speech 104,
z is the latent noise 14 (or more in general the input signal or the first data or the latent),
s is the mel-spectrogram of x (or more in general the target signal 12).
D(...) is the output of the evaluators in terms of distribution of probability (D(...) = 0 meaning "for sure fake", D(...) = 1 meaning "for sure real").

The spectral reconstruction loss $\mathcal{L}_{\mathrm{rec}}$ is still used for regularization to prevent the emergence of adversarial artifacts. The final loss is can be, for example:

$$\mathcal{L} = \frac{1}{4} \sum_{i=1}^{4} \mathcal{L}(D_i; G) + \mathcal{L}_{rec}.$$

where each i is the contribution at each evaluator 132a-132d (e.g.. each evaluator 132a-132d providing a different $D_i$) and $\mathcal{L}_{rec}$ is the pretrained (fixed) loss.

During training, there is a search foddr the minimum value of $\mathcal{L}$, which may be expressed for example as

$$\min_{G}(\mathbf{E}_z \left[ \sum_{i=1}^{4} -D_i\, G(s,z) \right] + \mathcal{L}_{rec})$$

Other kinds of minimizations may be performed.

In general terms, the minimum adversarial losses 140 are associated to the best parameters (e.g., 74, 75) to be applied to the stylistic element 77.

Discussion

Examples of the present disclosure are described in detail using the accompanying descriptions. In particular in the following description, many details are described in order to provide a more thorough explanation of examples of the disclosure. However, it will be apparent to those skilled in the art that other examples can be implemented without these specific details. Features of the different examples described can be combined with one another, unless features of a corresponding combination are mutually exclusive or such a combination is expressly excluded.

It should be pointed out that the same or similar elements or elements that have the same functionality can be provided with the same or similar reference symbols or are designated identically, with a repeated description of elements that are provided with the same or similar reference symbols or the same are typically omitted. Descriptions of elements that have the same or similar reference symbols or are labeled the same are interchangeable.

Neural vocoders have proven to outperform classical approaches in the synthesis of natural high-quality speech in many applications, such as text-to-speech, speech coding, and speech enhancement. The first groundbreaking generative neural network to synthesize high-quality speech was WaveNet, and shortly thereafter many other approaches were developed. These models offer state-of-the-art quality, but often at a very high computational cost and very slow synthesis. An abundance of models generating speech with low computational cost was presented in the recent years. Some of these are optimized versions of existing models, while others leverage the integration with classical methods. Besides, many completely new approaches were also introduced, often relying on GANs. Most GAN vocoders offer very fast generation on GPUs, but at the cost of compromising the quality of the synthesized speech.

One of the main objectives of this work is to propose a GAN architecture, which we call StyleMelGAN (and may be implemented, for example, in the audio generator 10), that can synthesize very high-quality speech 16 at low computational cost and fast training. StyleMelGAN's generator network may contain 3.86M trainable parameters, and synthesize speech at 22.05 kHz around 2.6x faster than real-time on CPU and more than 54x on GPU. The model may consist, for example, of eight up-sampling blocks, which gradually transform a low-dimensional noise vector (e.g., 30 in Fig. 1) into the raw speech waveform (e.g.16). The synthesis may be conditioned on the mel-spectrogram of the target speech (or more in general by target data 12), which may be inserted in every generator block (50a-50h) via a Temporal Adaptive DEnormalization (TADE) layer (60, 60a, 60b). This approach for inserting the conditioning features is very efficient and, as far as we know, new in the audio domain. The adversarial loss is computed (e.g. through the structure of Fig. 2, in GAN discriminator 100) by an ensemble of four discriminators 132a-132d (but in some examples a different number of discriminators is possible), each operating after a differentiable Pseudo Quadrature Mirror Filter-bank (PQMF) 110. This permits to analyze different frequency bands of the speech signal (104 or 16) during training. In order to make the training more robust and favor generalization, the discriminators (e.g. the four discriminators 132a-132d) are not conditioned on the input acoustic features used by the generator 10, and the speech signal (104 or 16) is sampled using random windows (e.g. 105a-105d).

To summarize, StyleMelGAN is proposed, which is a low complexity GAN for high-quality speech synthesis conditioned on a mel-spectrogram (e.g. 12) via TADE layers (e.g. 60, 60a, 60b). The generator 10 may be highly parallelizable. The generator 10 may be completely convolutional. The aforementioned generator 10 may be trained adversarial with an ensemble of PQMF multi-sampling random window discriminators (e.g. 132a-132d), which may be regularized by multi-scale spectral reconstruction losses. The quality of the generated speech 16 can be assessed using both objective (e.g. Fréchet scores) and/or subjective assessments. Two listening tests were conducted, a MUSHRA test for the copy-synthesis scenario and a P.800 ACR test for the TTS one, both confirming that StyleMelGAN achieves state-of-art speech quality.

Existing neural vocoders usually synthesize speech signals directly in time-domain, by modelling the amplitude of the final waveform. Most of these models are generative neural networks, i.e. they model the probability distribution of the speech samples observed in natural speech signals. They can be divided in autoregressive, which explicitly factorize the distribution into a product of conditional ones, and non-autoregressive or parallel, which instead model the joint distribution directly. Autoregressive models like WaveNet, SampleRNN and WaveRNN have been reported to synthesize speech signals of high perceptual quality. A big family of non-autoregressive models is the one of Normalizing Flows, e.g. WaveGlow. A hybrid approach is the use of Inverse Autoregressive Flows, which use a factorized transformation between a noise latent representation and the target speech distribution. Examples above mainly refer to autoregressive neural networks.

Early applications of GANs for audio include WaveGAN for unconditioned speech generation, and Gan-Synth for music generation. MelGAN learns a mapping between the mel-spectrogram of speech segments and their corresponding time-domain waveforms. It ensures faster than real-time generation and leverages adversarial training of multi-scale discriminators regularized by spectral reconstruction losses. GAN-TTS is the first GAN vocoder to use uniquely adversarial training for speech generation conditioned on acoustic features. Its adversarial loss is calculated by an ensemble of conditional and unconditional random windows discriminators. Parallel WaveGAN uses a generator, similar to WaveNet in structure, trained using an unconditioned discriminator regularized by a multi-scale spectral reconstruction loss. Similar ideas are used in Multiband-MelGAN, which generates each sub-band of the target speech separately, saving computational power, and then obtains the final waveform using a synthesis PQMF. Its multiscale discriminators evaluate the full-band speech waveform, and are regularized using a multi-bandscale spectral reconstruction loss. Research in this field is very active and we can cite the very recent GAN vocoders such as VocGan and HooliGAN.

Fig. 1 shows the generator architecture of StyleMelGAN implemented in the audio generator 10. The generator model maps a noise vector $z \sim \mathcal{N}(0, I_{128})$ (indicated with 30 in Fig. 1) into a speech waveform 16 (e.g. at 22050Hz) by progressive up-sampling (e.g. at blocks 50a-50h) conditioned on mel-spectrograms (or more in general target data) 12. It uses Temporal Adaptive DE-Normalization, TADE (see blocks 60, 60a, 60b), which may be a feature-wise conditioning based on linear modulation of normalized activation maps (76' in Fig. 3). The modulation parameters $\gamma$ (gamma, 74 in Fig. 3) and $\beta$ (beta, 75 in Fig. 3) are adaptively learned from the conditioning features, and in one example have the same dimension as the latent signal. This delivers the conditioning features to all layers of the generator model hence preserving the signal structure at all up-sampling stages. In the formula $z \sim \mathcal{N}(0, I_{128})$, 128 is the number of channels for the latent noise (different numbers may be chosen in different examples). A random noise of dimension 128 with mean 0 may therefore be generated, and with an autocorrelation matrix (square 128 by 128) is equal to the identity I. Hence, in examples the generated noise can be considered as completely decorrelated between the channels and of variance 1 (energy). $\mathcal{N}(0, I_{128})$ may be realized at every 22528 generated samples (or other numbers may be chosen for different examples); the dimension may therefore be 1 in the time axis and 128 in the channel axis (other numbers different from 128 may be provided).

Fig. 3 shows the structure of a portion of the audio generator 10 and illustrates the structure of the TADE block 60 (60a, 60b). The input activation c (76') is adaptively modulated via $c \odot \gamma + \beta$, where $\odot$ indicates elementwise multiplication (notably, $\gamma$ and $\beta$ have the same dimension of the activation map; it is also noted that c is the normalized version of the x of Fig. 3, and therefore $c \odot \gamma + \beta$ is the normalized version of $x \gamma + \beta$ which could also be indicated with $x \odot \gamma + \beta$). Before the modulation at block 77, an instance normalization layer 76 is used. Layer 76 (normalizing element) may normalize the first data to a normal distribution of zero-mean and unit-variance. Softmax-gated Tanh activation functions (e.g. the first instantiated by blocks 63a-64a-65a, and the second instantiated by blocks 63b-64b-65b at Fig. 4) can be used, which reportedly performs better than rectified linear unit, ReLU, functions. Softmax gating (e.g. as obtained by multiplications 65a and 65b) allows for less artifacts in audio waveform generation.

Fig. 4 shows the structure of a portion of the audio generator 10 and illustrates the TADEResBlock 50 (which may be any of blocks 50a-50h), which is the basic building block of the generator model. A complete architecture is shown in Fig. 1. It includes eight up-sampling stages 50a-50h (in other examples, other numbers are possible), consisting, for example, of a TADEResBlock and a layer 601 up-sampling the signal 79b by a factor of two, plus one final activation module 46 (in Fig. 1). The final activation comprises one TADEResBlock 42 followed by a channel-change convolutional layer 44, e.g. with tanh non-linearity 46. This design permits to use, for example, a channel depth of 64 for the convolution operations, hence saving complexity. Moreover, this up-sampling procedure permits to keep the dilation factor lower than 2.

Fig. 2 shows the architecture of a filter bank random window discriminators (FB-RWDs). StyleMelGAN may use multiple (e.g. four) discriminators 132a-132d for its adversarial training, wherein in examples the architecture of the discriminators 132a-132d has no average pooling down-sampling. Moreover, each discriminator (132a-132d) may operate on a random window (105a-105d) sliced from the input speech waveform (104 or 16). Finally, each discriminator (132a-132d) may analyze the sub-bands 120 of the input speech signal (104 or 16) obtained by an analysis PQMF (e.g. 110). More precisely we may use, in examples, 1, 2, 4, and 8 sub-bands calculated respectively from select random segments of respectively 512, 1024, 2048, and 4096 samples extracted from a waveform of one second. This enables a multi-resolution adversarial evaluation of the speech signal (104 or 16) in both time and frequency domains.

Training GANs is known to be challenging. Using random initialization of the weights (e.g. 74 and 75), the adversarial loss (e.g. 140) can lead to severe audio artifacts and unstable training. To avoid this problem, the generator 10 may be firstly pretrained using only the spectral reconstruction loss consisting of error estimates of the spectral convergence and the log-magnitude computed from different STFT analyses. The generator obtained in this fashion can generate very tonal signals although with significant smearing in high frequencies. This is nonetheless a good starting point for the adversarial training, which can then benefit from a better harmonic structure than if it started directly from a complete random noise signal. The adversarial training then drives the generation to naturalness by removing the tonal effects and sharpening the smeared frequency bands. The hinge loss 140 is used to evaluate the adversarial metric, as can be seen in equation 1 below.

$$(1) \qquad \mathcal{L}(D; G) = \boldsymbol{E}_{x,z} \left[ \text{ReLU}(1 - D(x)) + \text{ReLU}\left(1 + D\big(G(z; s)\big)\right) \right]$$

.where x is the real speech 104, z is the latent noise 14 (or more in general the input signal), and s is the mel-spectrogram of

x (or more in general the target signal 12). It should be noted that the spectral reconstruction loss $\mathcal{L}_{\text{rec}}$ (140) is still used for regularization to prevent the emergence of adversarial artifacts. The final loss (140) is according to equation 2, which can be seen below.

$$(2) \qquad \mathcal{L} = \frac{1}{4} \sum_{i=1}^{4} \mathcal{L}(D_i; G) + \mathcal{L}_{\text{rec}}.$$

Weight normalization may be applied to all convolution operations in G (or more precisely the GAN generator 11) and D (or more precisely the discriminator 100). In experiments, StyleMelGAN was trained using one NVIDIA Tesla V100 GPU on the LJSpeech corpus at 22050Hz. The log-magnitude mel-spectrograms is calculated for 80 mel-bands and is normalized to have zero mean and unit variance. This is only one possibility of course; other values are equally possible. The generator is pretrained for 100.000 steps using Adam optimizer with learning rate ($\text{lr}_g$) of $10^{-4}$, $\beta1 = 0.5$, $\beta2 = 0.9$. When starting the adversarial training, the learning rate of G ($\text{lr}_g$) is set to $5 * 10^{-5}$ and use FB-RWDs with the Adam optimizer with a discriminator learning rate ($\text{lr}_g$) of $2 * 10^{-4}$ and the same $\beta$. The FB-RWDs repeat the random windowing for *1s/window_length,* i.e. one second per window length, times at every training step to support the model with enough gradient updates. A batch size of 32 and segments with a length of 1s, i.e. one second, for each sample in the batch are used. The training lasts for about one and a half million steps, i.e. 1.500.000 steps.

The following lists the models used in experiments:

- WaveNet for targets experiments in copy-synthesis and text-to-speech
- PWGAN for targets experiments in copy-synthesis and text-to-speech
- MelGAN for targets experiments in copy-synthesis with objective evaluation
- WaveGlow for targets experiments in copy-synthesis
- Transformer.v3 for targets experiments in text-to-speech

Objective and subjective evaluations of StyleMelGAN against pretrained baseline vocoder models listed above have been performed. The subjective quality of the audio TTS outputs via a P.800 listening test performed by listeners were evaluated in a controlled environment. The test set contains unseen utterances recorded by the same speaker and randomly selected from the LibriVox online corpus. Hence, the model is robust and does not mainly depend on the training data. These utterances test the generalization capabilities of the models, since they were recorder in slightly different conditions and present varying prosody. The original utterances were resynthesized using the GriffinLim algorithm and used these in the place of the usual anchor condition. This favors the use of the totality of the rating scale.

Traditional objective measures such as PESQ and POLQA are not reliable to evaluate speech waveforms generated by neural vocoders. Instead, the conditional Fréchet Deep Speech Distances (cFDSD) are used. The following cFDSD scores for different neural vocoders show that StyleMelGAN significantly outperforms the other models.

| | | |
|---|---|---|
| • MelGAN | Train cFDSD 0.235 | Test cFDSD 0.227 |
| • PWGAN | Train cFDSD 0.122 | Test cFDSD 0.101 |
| • WaveGlow | Train cFDSD 0.099 | Test cFDSD 0.078 |
| • WaveNet | Train cFDSD 0.176 | Test cFDSD 0.140 |

(continued)

| | | |
|---|---|---|
| • StyleMelGAN | Train cFDSD 0.044 | Test cFDSD 0.068 |

It can be seen that that StyleMelGAN outperforms other adversarial and non-adversarial vocoders.

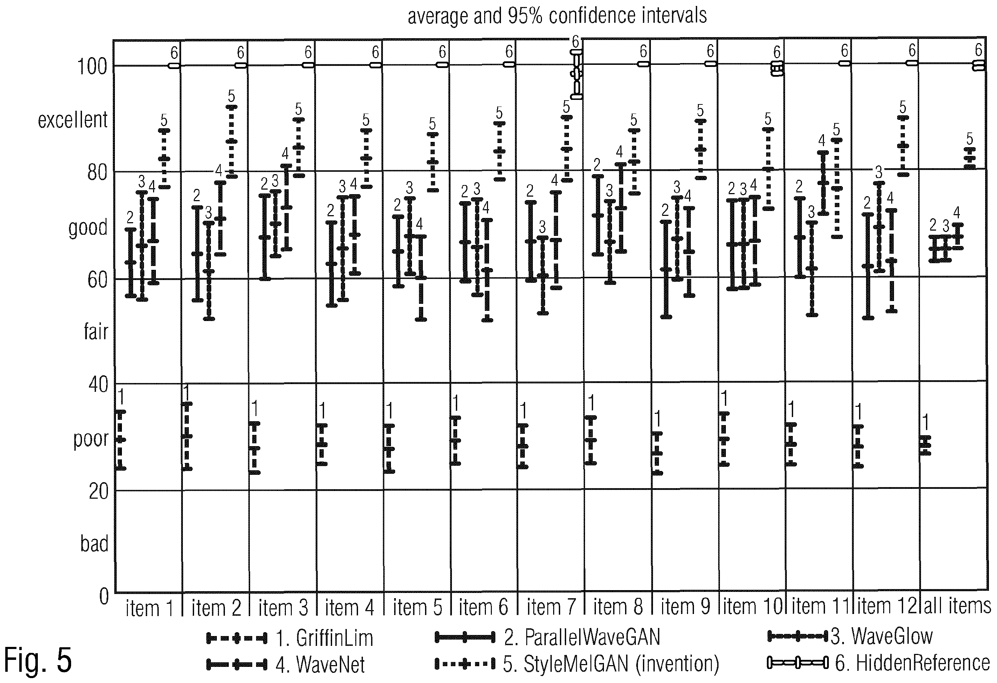

A MUSHRA listening test with a group of 15 expert listeners was conducted. This type of test was chosen, because this allows to more precisely evaluate the quality of the generated speech. The anchor is generated using the Py-Torch implementation of the Griffin-Lim algorithm with 32 iterations. Fig. 5 shows the result of the MUSHRA test. It can be seen that StyleMelGAN significantly outperforms the other vocoders by about 15 MUSHRA points. The results also show that WaveGlow produces outputs of comparable quality to WaveNet, while being on par with Parallel WaveGAN.

The subjective quality of the audio TTS outputs can be evaluated via a P.800 ACR listening test performed by 31 listeners in a controlled environment. The Transformer.v3 model of ESPNET can be used to generate mel-spectrograms of transcriptions of the test set. The same Griffin-Lim anchor can also be added, since this favors the use of the totality of the rating scale.

The following P800 mean opinion scores (MOS) for different TTS systems show the similar finding that StyleMelGAN clearly outperforms the other models:

| | |
|---|---|
| • GriffinLim | P800 MOS: 1.33 +/- 0.04 |
| • Transformer + Parallel WaveGAN | P800 MOS: 3.19 +/- 0.07 |
| • Transformer + WaveNet | P800 MOS: 3.82 +/- 0.07 |
| • Transformer + StyleMelGAN | P800 MOS: 4.00 +/- 0.07 |
| • Recording | P800 MOS: 4.29 +/- 0.06 |

The following shows the generation speed in real-time factor (RTF) with number of parameters of different parallel vocoder models. StyleMelGAN provides a clear compromise between generation quality and inference speed.

Here is given, the number of parameters and real-time factors for generation on a CPU (e.g. Intel Core i7-6700 3.40 GHz) and a GPU (e.g. Nvidia GeForce GTX1060) for various models under study.

| | | | |
|---|---|---|---|
| • Parallel WaveGAN | Parameters: 1.44M | CPU: 0.8x | GPU: 17x |
| • MelGAN | Parameters: 4.26M | CPU: 7x | GPU: 110x |
| • StyleMelGAN | Parameters: 3.86M | CPU: 2.6x | GPU: 54x |
| • WaveGlow | Parameters: 80M | - | GPU: 5x |

Finally, Fig. 5 shows results of a MUSHRA expert listening test. It can be seen that StyleMelGAN outperforms state-of-the-art models.

## Conclusions

This work presents StyleMelGAN, a lightweight and efficient adversarial vocoder for high-fidelity speech synthesis. The model uses temporal adaptive normalization (TADE) to deliver sufficient and accurate conditioning to all generation layers instead of just feeding the conditioning to the first layer. For adversarial training, the generator competes against filter bank random window discriminators that provide multiscale representations of the speech signal in both time and frequency domains. StyleMelGAN operates on both CPUs and GPUs by order of magnitude faster than real-time. Experimental objective and subjective results show that StyleMelGAN significantly outperforms prior adversarial vocoders as well as auto-regressive, flow-based and diffusion-based vocoders, providing a new state-of-the-art baseline for neural waveform generation.

To conclude, the embodiments described herein can optionally be supplemented by any of the important points or aspects described here. However, it is noted that the important points and aspects described here can either be used individually or in combination and can be introduced into any of the embodiments described herein, both individually and in combination.

Although some aspects have been described in the context of an apparatus, it is clear that these aspects also represent a description of the corresponding method, where a device or a part thereof corresponds to a method step or a feature of a method step. Analogously, aspects described in the context of a method step also represent a description of a corresponding apparatus or part of an apparatus or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein. A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer. The apparatus described herein, or any components of the apparatus described herein, may be implemented at least partially in hardware and/or in software. The methods described herein may be performed using a hardware apparatus, or using a computer, or using a combination of a hardware apparatus and a computer. The methods described herein, or any parts of the methods described herein, may be performed at least partially by hardware and/or by software.

The above described embodiments are merely illustrative for the principles of the present invention. It is understood that modifications of the arrangements and the details described herein will be apparent to others skilled in the art. It is the intent, therefore, to be limited only by the scope of the impending patent claims and not by the specific details presented by way of description and explanation of the embodiments herein.

## Bibliography

A. van den Oord, S. Dieleman, H. Zen, K. Simonyan, et al., "WaveNet: A Generative Model for Raw Audio," arXiv:1609.03499, 2016.

R. Prenger, R. Valle, and B. Catanzaro, "Waveglow: A Flow-based Generative Network for Speech Synthesis," in IEEE International Conference on Acoustics, Speech and Signal Processing (ICASSP), 2019, pp. 3617-3621.

S. Mehri, K. Kumar, I. Gulrajani, R. Kumar, et al., "SampleRNN: An Unconditional End-to-End Neural Audio Generation Model," arXiv: 1612.07837, 2016.

N. Kalchbrenner, E. Elsen, K. Simonyan, S. Noury, et al., "Efficient neural audio synthesis," arXiv:1802.08435, 2018.

A. van den Oord, Y. Li, I. Babuschkin, K. Simonyan, et al., "Parallel WaveNet: Fast High-Fidelity Speech Synthesis," in Proceedings of the 35th ICML, 2018, pp. 3918-3926.

J. Valin and J. Skoglund, "LPCNET: Improving Neural Speech Synthesis through Linear Prediction," in IEEE International Conference on Acoustics, Speech and Signal Processing (ICASSP), 2019, pp. 5891-5895.

K. Kumar, R. Kumar, de T. Boissiere, L. Gestin, et al., "MelGAN: Generative Adversarial Networks for Con-ditional Waveform Synthesis," in Advances in Neur/PS 32, pp. 14910-14921. 2019.

R. Yamamoto, E. Song, and J. Kim, "Parallel Wavegan: A Fast Waveform Generation Model Based on Genera-tive Adversarial Networks with Multi-Resolution Spec-trogram," in IEEE International Conference on Acous-tics, Speech and Signal Processing (ICASSP), 2020, pp. 6199-6203.

M. Bin' kowski, J. Donahue, S. Dieleman, A. Clark, et al., "High Fidelity Speech Synthesis with Adversarial Networks," arXiv:1909. 11646, 2019.

T. Park, M. Y. Liu, T. C. Wang, and J. Y. Zhu, "Se-mantic Image Synthesis With Spatially-Adaptive Nor-malization," in Proc. of the IEEE Conference on Computer Vision and Pattern Recognition (CVPR), 2019.

P. Govalkar, J. Fischer, F. Zalkow, and C. Dittmar, "A Comparison of Recent Neural Vocoders for Speech Signal Reconstruction," in Proceedings of the ISCA Speech Synthesis Workshop, 2019, pp. 7-12.

I. Goodfellow, J. Pouget-Abadie, M. Mirza, B. Xu, et al., "Generative Adversarial Nets," in Advances in Neurl PS 27, pp. 2672-2680. 2014.C. Donahue, J. McAuley, and M. Puckette, "Adversarial Audio Synthesis," arXiv:1802.04208, 2018.

J. Engel, K. K. Agrawal, S. Chen, I. Gulrajani, et al., "GANSynth: Adversarial Neural Audio Synthesis," ar-Xiv:1902.08710, 2019.

G. Yang, S. Yang, K. Liu, P. Fang, et al., "Multiband MelGAN: Faster Waveform Generation for High-Quality Text-to-Speech," arXiv:2005.05106, 2020.

J. Yang, J. Lee, Y. Kim, H. Cho, and I. Kim, "VocGAN: A High-Fidelity Real-time Vocoder with a Hierarchically-nested Adversarial Network," arXiv:2007. 15256, 2020.

Jungil Kong, Jaehyeon Kim, and Jaekyoung Bae, "Hifi-gan: Generative adversarial networks for efficient and high fidelity speech synthesis," arXiv preprint arXiv:2010.05646, 2020.

D. Ulyanov, A. Vedaldi, and V. Lempitsky, "Instance normalization: The missing ingredient for fast styliza-tion," arXiv:1607.08022, 2016.

A. Mustafa, A. Biswas, C. Bergler, J. Schottenhamml, and A. Maier, "Analysis by Adversarial Synthesis - A Novel Approach for Speech Vocoding," in Proc. Inter-speech, 2019, pp. 191-195.

T. Q. Nguyen, "Near-perfect-reconstruction pseudo-QMF banks," IEEE Transactions on Signal Processing, vol. 42, no. 1, pp. 65-76, 1994.

T. Salimans and D. P. Kingma, "Weight normalization: A simple reparameterization to accelerate training of deep neural networks," in Advances in NeurIPS, 2016, pp. 901-909.

K. Ito and L. Johnson, "The LJ Speech Dataset," https://keithito.com/LJ-Speech-Dataset/, 2017.

D. P. Kingma and J. Ba, "Adam: A method for stochas-tic optimization," arXiv:1412.6980, 2014.

T. Hayashi, R. Yamamoto, K. Inoue, T. Yoshimura, et al., "Espnet-tts: Unified, reproducible, and inte-gratable open source end-to-end text-to-speech toolkit," in IEEE International Conference on Acoustics, Speech and Signal Processing (ICASSP). IEEE, 2020, pp. 7654-7658.

## EP 4 229 624 B1

A. Gritsenko, T. Salimans, R. van den Berg, J. Snoek, and N. Kalchbrenner, "A Spectral Energy Distance for Parallel Speech Synthesis," arXiv:2008.01160, 2020.

"P.800: Methods for subjective determination of trans-mission quality," Standard, International Telecommuni-cation Union, 1996.

## Claims

1. Audio generator (10), configured to generate an audio signal (16) from an input signal (14) and target data (12), the target data (12) representing the audio signal (16), comprising:

   A first processing block (40, 50, 50a-50h), configured to receive first data (15, 59a) derived from the input signal (14) and to output first output data (69), wherein the first output data (69) comprises a plurality of channels (47), and
   a second processing block (45), configured to receive, as second data, the first output data (69) or data derived from the first output data (69),
   wherein the first processing block (50) comprises for each channel of the first output data:

   a conditioning set of learnable layers (71, 72, 73) configured to process the target data (12) to obtain conditioning features parameters (74, 75), the target data (12) being derived from a text; and
   a styling element (77), configured to apply the conditioning feature parameters (74, 75) to the first data (15, 59a) or normalized first data (59, 76'); and

   wherein the second processing block (45) is configured to combine the plurality of channels (47) of the second data (69) to obtain the audio signal (16).

2. Audio generator according to claim 1, wherein the target data (12) is a spectrogram.

3. Audio generator according to any one of the preceding claims, wherein the target data (12) is a mel-spectrogram.

4. The audio generator of any one of the preceding claims, wherein the target data (12) comprise at least one acoustic feature among a log-spectrogram, or an MFCC, and a mel-spectrogram or another type of spectrogram obtained from a text.

5. The audio generator of any one of the preceding claims, configured to obtain the target data (12) by converting (1110) an input in form of text or elements of text onto the at least one acoustic feature.

6. The audio generator of any one of the preceding claims, configured to obtain the target data (12) by converting (1114) at least one linguistic feature onto the at least one acoustic feature.

7. The audio generator of any one of the preceding claims, wherein the target data (12) comprise at least one linguistics feature among a phoneme, words prosody, intonation, phrase breaks, and filled pauses obtained from a text.

8. The audio generator of claim 7, configured to obtain the target data (12) by converting (1110) an input in form of text or elements of text onto the at least one linguistic feature.

9. The audio generator of any one of the preceding claims, wherein the target data (12) comprise at least one among a character and a word obtained from a text.

10. The audio generator of any one of the preceding claims, wherein the target data (12) are derived from a text (112) using a statistical model, performing text analysis and/or using an acoustic model.

11. The audio generator of any one of the preceding claims, wherein the target data (12) are derived from a text (112) using a learnable model performing text analysis and/or using an acoustic model.

12. The audio generator of any one of the preceding claims, wherein the target data (12) are derived from a text (112) using a rules-based algorithm performing text analysis and/or an acoustic model.

13. The audio generator of any one of the preceding claims configured to derive the target data through at least one deterministic layer.

14. The audio generator of any one of the preceding claims configured to derive the target data through at least one learnable layer.

15. Audio generator according to any one of the preceding claims, wherein the conditioning set of learnable layers consists of one or at least two convolution layers (71-73).

16. Audio generator according to claim 15, wherein a first convolution layer (71-73) is configured to convolute the target data (12) or up-sampled target data to obtain first convoluted data (71') using a first activation function.

17. Audio generator according to any one of the preceding claims, wherein the conditioning set of learnable layers (71-73) and the styling element (77) are part of a weight layer in a residual block (50, 50a-50h) of a neural network comprising one or more residual blocks (50, 50a-50h).

18. Audio generator according to any one of claims 1 to 17, wherein the audio generator (10) further comprises a normalizing element (76), which is configured to normalize the first data (59a, 15).

19. Audio generator according to any one of claims 1 to 18, wherein the target data (12) is up-sampled by a factor of at least 2.

20. Audio generator according to claim 19, wherein the target data (12) is up-sampled (70) by non-linear interpolation.

21. Audio generator according to claim 16 or any one of claims 17 to 20 when depending on claim 16, wherein the first activation function is a leaky rectified linear unit, leaky ReLu, function.

22. Audio generator according to any one of claims 1 to 21, wherein convolution operations (61a, 61b, 62a, 62b) run with maximum dilation factor of 2.

23. Audio generator according to any one of claims 1 to 22, wherein the first data (15, 59, 59a, 59b) has a lower dimensionality than the audio signal.

24. Method for generating an audio signal (16) by an audio generator (10) from an input signal (14) and target data (12), the target data (12) representing the audio signal (16) and being derived from a text, comprising:

receiving, by a first processing block (50, 50a-50h), first data (16559, 59a, 59b) derived from the input signal (14);
for each channel of a first output data (59b, 69):

processing, by a conditioning set of learnable layers (71, 72, 73) of the first processing block (50), the target data (12) to obtain conditioning feature parameters (74, 75); and
applying, by a styling element (77) of the first processing block (50), the conditioning feature parameters (74, 75) to the first data (15, 59) or normalized first data (76');

outputting, by the first processing block (50), first output data (69) comprising a plurality of channels (47);
receiving, by a second processing block (45), as second data, the first output data (69) or data derived from the first output data (69); and
combining, by the second processing block (45), the plurality of channels (47) of the second data to obtain the audio signal (16).

**Patentansprüche**

1. Audiogenerator (10), der dazu konfiguriert ist, ein Audiosignal (16) aus einem Eingangssignal (14) und Zieldaten (12) zu erzeugen, wobei die Zieldaten (12) das Audiosignal (16) darstellen, wobei der Audiogenerator folgende Merkmale aufweist:

einen ersten Verarbeitungsblock (40, 50, 50a-50h), der dazu konfiguriert ist, erste Daten (15, 59a) zu empfangen, die von dem Eingangssignal (14) abgeleitet werden, und erste Ausgangsdaten (69) auszugeben, wobei die ersten Ausgangsdaten (69) eine Mehrzahl von Kanälen (47) aufweisen, und

einen zweiten Verarbeitungsblock (45), der dazu konfiguriert ist, als zweite Daten die ersten Ausgangsdaten (69) oder von den ersten Ausgangsdaten (69) abgeleitete Daten zu empfangen,

wobei der erste Verarbeitungsblock (50) für jeden Kanal der ersten Ausgangsdaten folgende Merkmale aufweist:

eine Konditioniermenge von lernbaren Schichten (71, 72, 73), die dazu konfiguriert sind, die Zieldaten (12) zu verarbeiten, um Konditioniermerkmalsparameter (74, 75) zu erhalten, wobei die Zieldaten (12) von einem Text abgeleitet werden; und

ein Gestaltungselement (77), das dazu konfiguriert ist, die Konditioniermerkmalsparameter (74, 75) auf die ersten Daten (15, 59a) oder normalisierte erste Daten (59, 76') anzuwenden; und

wobei der zweite Verarbeitungsblock (45) dazu konfiguriert ist, die Mehrzahl von Kanälen (47) der zweiten Daten (69) zu kombinieren, um das Audiosignal (16) zu erhalten.

2. Audiogenerator gemäß Anspruch 1, wobei die Zieldaten (12) ein Spektrogramm sind.

3. Audiogenerator gemäß einem der vorhergehenden Ansprüche, wobei die Zieldaten (12) ein mel-Spektrogramm sind.

4. Audiogenerator gemäß einem der vorhergehenden Ansprüche, wobei die Zieldaten (12) mindestens ein akustisches Merkmal aus einem log-Spektrogramm oder einem MFCC und einem mel-Spektrogramm oder einem anderen Typ von Spektrogramm, das aus einem Text erhalten wird, aufweisen.

5. Audiogenerator gemäß einem der vorhergehenden Ansprüche, der dazu konfiguriert ist, die Zieldaten (12) durch Umwandeln (1110) einer Eingabe in Form von Text oder Elementen von Text in das mindestens eine akustische Merkmal zu erhalten.

6. Audiogenerator gemäß einem der vorhergehenden Ansprüche, der dazu konfiguriert ist, die Zieldaten (12) durch Umwandeln (1114) mindestens eines linguistischen Merkmals in das mindestens eine akustische Merkmal zu erhalten.

7. Audiogenerator gemäß einem der vorhergehenden Ansprüche, wobei die Zieldaten (12) mindestens ein linguistisches Merkmal aus einem Phonem, Wörterprosodie, Intonation, Phrasenpausen und gefüllten Pausen, die aus einem Text erhalten werden, aufweisen.

8. Audiogenerator gemäß Anspruch 7, der dazu konfiguriert ist, die Zieldaten (12) durch Umwandeln (1110) einer Eingabe in Form von Text oder Elementen von Text in das mindestens eine linguistische Merkmal zu erhalten.

9. Audiogenerator gemäß einem der vorhergehenden Ansprüche, wobei die Zieldaten (12) mindestens eines aus einem Zeichen und einem Wort, das aus einem Text erhalten wird, aufweisen.

10. Audiogenerator gemäß einem der vorhergehenden Ansprüche, wobei die Zieldaten (12) aus einem Text (112) unter Verwendung eines statistischen Modells, unter Durchführung einer Textanalyse und/oder unter Verwendung eines akustischen Modells abgeleitet werden.

11. Audiogenerator gemäß einem der vorhergehenden Ansprüche, wobei die Zieldaten (12) aus einem Text (112) unter Verwendung eines lernbaren Modells, unter Durchführung einer Textanalyse und/oder unter Verwendung eines akustischen Modells abgeleitet werden.

12. Audiogenerator gemäß einem der vorhergehenden Ansprüche, wobei die Zieldaten (12) aus einem Text (112) unter Verwendung eines regelbasierten Algorithmus, unter Durchführung einer Textanalyse und/oder eines akustischen Modells abgeleitet werden.

13. Audiogenerator gemäß einem der vorhergehenden Ansprüche, der dazu konfiguriert ist, die Zieldaten durch mindestens eine deterministische Schicht abzuleiten.

14. Audiogenerator gemäß einem der vorhergehenden Ansprüche, der dazu konfiguriert ist, die Zieldaten durch mindestens eine lernbare Schicht abzuleiten.

15. Audiogenerator gemäß einem der vorhergehenden Ansprüche, wobei die Konditioniermenge von lernbaren Schichten aus einer oder mindestens zwei Faltungsschichten (71-73) besteht.

16. Audiogenerator gemäß Anspruch 15, wobei eine erste Faltungsschicht (71-73) dazu konfiguriert ist, die Zieldaten (12) oder aufwärtsabgetastete Zieldaten zu falten, um erste gefaltete Daten (71') zu erhalten, unter Verwendung einer ersten Aktivierungsfunktion.

17. Audiogenerator gemäß einem der vorhergehenden Ansprüche, wobei die Konditioniermenge von lernbaren Schichten (71-73) und das Gestaltungselement (77) Teil einer Gewichtungsschicht in einem Restblock (50, 50a-50h) eines neuronalen Netzwerks sind, das einen oder mehrere Restblöcke (50, 50a-50h) aufweist.

18. Audiogenerator gemäß einem der Ansprüche 1 bis 17, wobei der Audiogenerator (10) ferner ein Normalisierungselement (76) aufweist, das dazu konfiguriert ist, die ersten Daten (59a, 15) zu normalisieren.

19. Audiogenerator gemäß einem der Ansprüche 1 bis 18, wobei die Zieldaten (12) um einen Faktor von mindestens 2 aufwärtsabgetastet werden.

20. Audiogenerator gemäß Anspruch 19, wobei die Zieldaten (12) durch nichtlineare Interpolation aufwärtsabgetastet werden (70).

21. Audiogenerator gemäß Anspruch 16 oder einem der Ansprüche 17 bis 20, wenn abhängig von Anspruch 16, wobei die erste Aktivierungsfunktion eine Leaky-Rectified-Linear-Unit-, LeakyReLu,-Funktion ist.

22. Audiogenerator gemäß einem der Ansprüche 1 bis 21, wobei Faltungsoperationen (61a, 61b, 62a, 62b) mit einem Maximalstreckungsfaktor von 2 ablaufen.

23. Audiogenerator gemäß einem der Ansprüche 1 bis 22, wobei die ersten Daten (15, 59, 59a, 59b) eine geringere Dimensionalität als das Audiosignal aufweisen.

24. Verfahren zum Erzeugen eines Audiosignals (16) durch einen Audiogenerator (10) aus einem Eingangssignal (14) und Zieldaten (12), wobei die Zieldaten (12) das Audiosignal (16) darstellen und von einem Text abgeleitet sind, wobei das Verfahren folgende Schritte aufweist:

Empfangen, durch einen ersten Verarbeitungsblock (50, 50a-50h), von ersten Daten (15, 59, 59a, 59b), die von dem Eingangssignal (14) abgeleitet werden;
für jeden Kanal von ersten Ausgangsdaten (59b, 69):

Verarbeiten, durch eine Konditioniermenge von lernbaren Schichten (71, 72, 73) des ersten Verarbeitungsblocks (50), der Zieldaten (12), um Konditioniermerkmalsparameter (74, 75) zu erhalten; und
Anwenden, durch ein Gestaltungselement (77) des ersten Verarbeitungsblocks (50), der Konditioniermerkmalsparameter (74, 75) auf die ersten Daten (15, 59) oder normalisierte erste Daten (76');
Ausgeben, durch den ersten Verarbeitungsblock (50), von ersten Ausgangsdaten (69), die eine Mehrzahl von Kanälen (47) aufweisen;
Empfangen, durch einen zweiten Verarbeitungsblock (45), als zweite Daten der ersten Ausgangsdaten (69) oder von Daten, die von den ersten Ausgangsdaten (69) abgeleitet werden; und
Kombinieren, durch den zweiten Verarbeitungsblock (45), der Mehrzahl von Kanälen (47) der zweiten Daten, um das Audiosignal (16) zu erhalten.

## Revendications

1. Générateur audio (10), configuré pour générer un signal audio (16) à partir d'un signal d'entrée (14) et de données cibles (12), les données cibles (12) représentant le signal audio (16), comprenant :

un premier bloc de traitement (40, 50, 50a-50h), configuré pour recevoir des premières données (15, 59a) dérivées du signal d'entrée (14) et pour délivrer en sortie des premières données de sortie (69), dans lequel les premières données de sortie (69) comprennent une pluralité de canaux (47), et un deuxième bloc de traitement (45), configuré pour recevoir, en tant que deuxièmes données, les premières données de sortie (69) ou des données dérivées des premières données de sortie (69),
dans lequel le premier bloc de traitement (50) comprend pour chaque canal des premières données de sortie :

un ensemble de conditionnement de couches assimilables (71, 72, 73) configurées pour traiter les données cibles (12) afin d'obtenir des paramètres de caractéristiques de conditionnement (74, 75), les données cibles (12) étant dérivées d'un texte ; et
un élément de style (77), configuré pour appliquer les paramètres de caractéristiques de conditionnement (74, 75) aux premières données (15, 59a) ou à des premières données normalisées (59, 76') ; et

dans lequel le deuxième bloc de traitement (45) est configuré pour combiner la pluralité de canaux (47) des deuxièmes données (69) afin d'obtenir le signal audio (16).

2. Générateur audio selon la revendication 1, dans lequel les données cibles (12) sont un spectrogramme.

3. Générateur audio selon l'une quelconque des revendications précédentes, dans lequel les données cibles (12) sont un spectrogramme mel.

4. Générateur audio selon l'une quelconque des revendications précédentes, dans lequel les données cibles (12) comprennent au moins une caractéristique acoustique parmi un spectrogramme logarithmique, ou un MFCC, et un spectrogramme mel ou un autre type de spectrogramme obtenu à partir d'un texte.

5. Générateur audio selon l'une quelconque des revendications précédentes, configuré pour obtenir les données cibles (12) en convertissant (1110) une entrée sous forme de texte ou d'éléments de texte en la au moins une caractéristique acoustique.

6. Générateur audio selon l'une quelconque des revendications précédentes, configuré pour obtenir les données cibles (12) en convertissant (1114) au moins une caractéristique linguistique en la au moins une caractéristique acoustique.

7. Générateur audio selon l'une quelconque des revendications précédentes, dans lequel les données cibles (12) comprennent au moins une caractéristique linguistique parmi un phonème, la prosodie des mots, l'intonation, des ruptures de phrases et des pauses remplies obtenus à partir d'un texte.

8. Générateur audio selon la revendication 7, configuré pour obtenir les données cibles (12) en convertissant (1110) une entrée sous forme de texte ou d'éléments de texte en la au moins une caractéristique linguistique.

9. Générateur audio selon l'une quelconque des revendications précédentes, dans lequel les données cibles (12) comprennent au moins un parmi un caractère et un mot obtenus à partir d'un texte.

10. Générateur audio selon l'une quelconque des revendications précédentes, dans lequel les données cibles (12) sont dérivées d'un texte (112) en utilisant un modèle statistique, en effectuant une analyse de texte et/ou en utilisant un modèle acoustique.

11. Générateur audio selon l'une quelconque des revendications précédentes, dans lequel les données cibles (12) sont dérivées d'un texte (112) en utilisant un modèle assimilable effectuant une analyse de texte et/ou en utilisant un modèle acoustique.

12. Générateur audio selon l'une quelconque des revendications précédentes, dans lequel les données cibles (12) sont dérivées d'un texte (112) en utilisant un algorithme basé sur des règles effectuant une analyse de texte et/ou un modèle acoustique.

13. Générateur audio selon l'une quelconque des revendications précédentes configuré pour dériver les données cibles par le biais d'au moins une couche déterministe.

14. Générateur audio selon l'une quelconque des revendications précédentes configuré pour dériver les données cibles par le biais d'au moins une couche assimilable.

15. Générateur audio selon l'une quelconque des revendications précédentes, dans lequel l'ensemble de conditionnement de couches assimilables consiste en une ou au moins deux couches de convolution (71-73).

**16.** Générateur audio selon la revendication 15, dans lequel une première couche de convolution (71-73) est configurée pour effectuer une convolution des données cibles (12) ou de données cibles suréchantillonnées afin d'obtenir des premières données convolutées (71') en utilisant une première fonction d'activation.

**17.** Générateur audio selon l'une quelconque des revendications précédentes, dans lequel l'ensemble de conditionnement de couches assimilables (71-73) et l'élément de style (77) font partie d'une couche de poids dans un bloc résiduel (50, 50a-50h) d'un réseau neuronal comprenant un ou plusieurs blocs résiduels (50, 50a-50h).

**18.** Générateur audio selon l'une quelconque des revendications 1 à 17, dans lequel le générateur audio (10) comprend en outre un élément de normalisation (76), qui est configuré pour normaliser les premières données (59a, 15).

**19.** Générateur audio selon l'une quelconque des revendications 1 à 18, dans lequel les données cibles (12) sont suréchantillonnées d'un facteur d'au moins 2.

**20.** Générateur audio selon la revendication 19, dans lequel les données cibles (12) sont suréchantillonnées (70) par interpolation non linéaire.

**21.** Générateur audio selon la revendication 16 ou l'une quelconque des revendications 17 à 20 lorsqu'elle dépend de la revendication 16, dans lequel la première fonction d'activation est une fonction d'unité linéaire rectifiée à fuite, leaky ReLu.

**22.** Générateur audio selon l'une quelconque des revendications 1 à 21, dans lequel des opérations de convolution (61a, 61b, 62a, 62b) fonctionnent avec un facteur de dilatation maximum de 2.

**23.** Générateur audio selon l'une quelconque des revendications 1 à 22, dans lequel les premières données (15, 59, 59a, 59b) présentent une dimensionnalité plus petite que le signal audio.

**24.** Procédé de génération d'un signal audio (16) par un générateur audio (10) à partir d'un signal d'entrée (14) et de données cibles (12), les données cibles (12) représentant le signal audio (16) et étant dérivées d'un texte, comprenant le fait de :

recevoir, par un premier bloc de traitement (50, 50a-50h), des premières données (16559, 59a, 59b) dérivées du signal d'entrée (14) ;
pour chaque canal de premières données sortie (59b, 69) :

traiter, par un ensemble de conditionnement de couches assimilables (71, 72, 73) du premier bloc de traitement (50), les données cibles (12) afin d'obtenir des paramètres de caractéristiques de conditionnement (74, 75) ; et
appliquer, par un élément de style (77) du premier bloc de traitement (50), les paramètres de caractéristiques de conditionnement (74, 75) aux premières données (15, 59) ou à des premières données normalisées (76') ;

délivrer en sortie, par le premier bloc de traitement (50), des premières données de sortie (69) comprenant une pluralité de canaux (47) ;
recevoir, par un deuxième bloc de traitement (45), en tant que deuxièmes données, les premières données de sortie (69) ou des données dérivées des premières données de sortie (69) ; et
combiner, par le deuxième bloc de traitement (45), la pluralité de canaux (47) des deuxièmes données afin d'obtenir le signal audio (16).

Fig. 1

multiple random windows

Fig. 2

Fig. 3

Fig. 4

average and 95% confidence intervals

Fig. 5

1. GriffinLim    2. ParallelWaveGAN    3. WaveGlow
4. WaveNet    5. StyleMelGAN (invention)    6. HiddenReference

Fig. 6

⌊a⌋ ⌊b⌋ • • • ⌊z⌋ ← text 112 (or other input sequence)

↓ audio synthesis (text analysis) 1110

} frequency

mel-spectrogram 12
(or other target data 12)

samples

↓ upsampling 70

waveform synthesis
1120

upsampled mel-spectrogram 12'
(or other upsampled target data)

} 2 × frequency

2 × samples

latent noise c
(14, 59a, 15)
e.g., normalized (76')

12a

3 × 3

12'

} 71-73

| samples (49) | } channels (47) |

74 ↓    75 ↓

↓ 77

| γ | | β | 77 ⇒ | γ ⊙ c + β | ← latent

**Fig. 7**

text analysis, like
text normalization,
word segmentation,
prosody prediction and
graphene-to-pho-
neme conversion

text 112

e.g. relevant vor at least
one of utterance, phasing,
intonation, duration, etc.

audio synthesis
(text analysis)

1110

e.g. target data 12
audio representation
(e.g. mel-spectrogram or MFCCs)

14

input signal

waveform synthesis
(vocoder)

1120

16
output audio signal

10

## Fig. 8

text 112

text analysis

1112

1110

intermediate target data 212
(e.g. linguistic features)

audio synthesis
(e.g. acoustic model)

1114

target data 12 (e.g. acoustic features,
e.g. spectrogram(s))

14

input signal
(e.g. noise)

waveform synthesis
(vocoder)

1120

16
output audio signal

10 (10a)

## Fig. 9a

Fig. 9b

Fig. 9c

input
to block
1110

| | input:<br>plain text | input:<br>linguistic feature | input:<br>acoustic feature |
|---|---|---|---|
| target data<br>is plain text | A | NO | NO |
| target data<br>is linguistic<br>feature | B | D | NO |
| target data<br>is acoustic<br>feature | C | E | F |

output:
target data
12

1110

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110060690 B

**Non-patent literature cited in the description**

- **A. VAN DEN OORD** ; **S. DIELEMAN** ; **H. ZEN** ; **K. SIMONYAN et al.** WaveNet: A Generative Model for Raw Audio. *arXiv:1609.03499*, 2016
- **R. PRENGER** ; **R. VALLE** ; **B. CATANZARO**. Waveglow: A Flow-based Generative Network for Speech Synthesis. *IEEE International Conference on Acoustics, Speech and Signal Processing (ICASSP)*, 2019, 3617-3621
- **S. MEHRI** ; **K. KUMAR** ; **I. GULRAJANI** ; **R. KUMAR et al.** SampleRNN: An Unconditional End-to-End Neural Audio Generation Model. *arXiv: 1612.07837*, 2016
- **N. KALCHBRENNER** ; **E. ELSEN** ; **K. SIMONYAN** ; **S. NOURY et al.** Efficient neural audio synthesis. *arXiv*
- **A. VAN DEN OORD** ; **Y. LI, I. BABUSCHKIN** ; **K. SIMONYAN et al.** Parallel WaveNet: Fast High-Fidelity Speech Synthesis. *Proceedings of the 35th ICML*, 2018, 3918-3926
- **J. VALIN** ; **J. SKOGLUND**. LPCNET: Improving Neural Speech Synthesis through Linear Prediction. *IEEE International Conference on Acoustics, Speech and Signal Processing (ICASSP)*, 2019, 5891-5895
- **K. KUMAR** ; **R. KUMAR** ; **T. BOISSIERE** ; **L. GESTIN et al.** MelGAN: Generative Adversarial Networks for Con-ditional Waveform Synthesis. *Advances in Neur/PS*, 2019, vol. 32, 14910-14921
- **R. YAMAMOTO** ; **E. SONG** ; **J. KIM**. Parallel Wavegan: A Fast Waveform Generation Model Based on Genera-tive Adversarial Networks with Multi-Resolution Spec-trogram. *IEEE International Conference on Acous-tics, Speech and Signal Processing (ICASSP)*, 2020, 6199-6203
- **M. BIN' KOWSKI** ; **J. DONAHUE** ; **S. DIELEMAN** ; **A. CLARK et al.** High Fidelity Speech Synthesis with Adversarial Networks. *arXiv*, 2019, vol. 1909, 11646
- **T. PARK** ; **M. Y. LIU** ; **T. C. WANG** ; **J. Y. ZHU**. Se-mantic Image Synthesis With Spatially-Adaptive Nor-malization. *Proc. of the IEEE Conference on Computer Vision and Pattern Recognition (CVPR)*, 2019

- **P. GOVALKAR** ; **J. FISCHER** ; **F. ZALKOW** ; **C. DITTMAR**. A Comparison of Recent Neural Vocoders for Speech Signal Reconstruction. *Proceedings of the ISCA Speech Synthesis Workshop*, 2019, 7-12
- **I. GOODFELLOW** ; **J. POUGET-ABADIE** ; **M. MIRZA** ; **B. XU et al.** Generative Adversarial Nets. *Advances in Neurl PS*, 2014, vol. 27, 2672-2680
- **C. DONAHUE** ; **J. MCAULEY** ; **M. PUCKETTE**. Adversarial Audio Synthesis. *arXiv:1802.04208*, 2018
- **J. ENGEL** ; **K. K. AGRAWAL** ; **S. CHEN** ; **I. GULRAJANI et al.** GANSynth: Adversarial Neural Audio Synthesis. *arXiv:1902.08710*, 2019
- **G. YANG** ; **S. YANG** ; **K. LIU** ; **P. FANG et al.** Multiband MelGAN: Faster Waveform Generation for High-Quality Text-to-Speech. *arXiv:2005.05106*, 2020
- **J. YANG** ; **J. LEE** ; **Y. KIM** ; **H. CHO** ; **I. KIM**. VocGAN: A High-Fidelity Real-time Vocoder with a Hierarchically-nested Adversarial Network. *arXiv:2007. 15256*, 2020
- **JUNGIL KONG** ; **JAEHYEON KIM** ; **JAEKYOUNG BAE**. Hifi-gan: Generative adversarial networks for efficient and high fidelity speech synthesis. *arXiv preprint arXiv:2010.05646*, 2020
- **D. ULYANOV** ; **A. VEDALDI** ; **V. LEMPITSKY**. Instance normalization: The missing ingredient for fast styliza-tion. *arXiv:1607.08022*, 2016
- **A. MUSTAFA** ; **A. BISWAS** ; **C. BERGLER** ; **J. SCHOTTENHAMML** ; **A. MAIER**. Analysis by Ad-versarial Synthesis - A Novel Approach for Speech Vocoding. *Proc. Inter-speech*, 2019, 191-195
- **T. Q. NGUYEN**. Near-perfect-reconstruction pseudo-QMF banks. *IEEE Transactions on Signal Proces-sing*, 1994, vol. 42 (1), 65-76
- **T. SALIMANS** ; **D. P. KINGMA**. Weight normalization: A simple reparameterization to accelerate training of deep neural networks. *Advances in NeurIPS*, 2016, 901-909
- **K. ITO** ; **L. JOHNSON**. *The LJ Speech Dataset*, 2017, https://keithito.com/LJ-Speech-Dataset

- **D. P. KINGMA** ; **J. BA**. Adam: A method for stochastic optimization. *arXiv:1412.6980*, 2014
- Espnet-tts: Unified, reproducible, and inte-gratable open source end-to-end text-to-speech toolkit. **T. HAYASHI** ; **R. YAMAMOTO** ; **K. INOUE** ; **T. YOSHIMURA et al.** IEEE International Conference on Acoustics, Speech and Signal Processing (ICASSP). IEEE, 2020, 7654-7658
- **A. GRITSENKO** ; **T. SALIMANS** ; **R. VAN DEN BERG** ; **J. SNOEK** ; **N. KALCHBRENNER**. A Spectral Energy Distance for Parallel Speech Synthesis. *arXiv:2008.01160*, 2020
- P.800: Methods for subjective determination of transmission quality. *Standard, International Telecommuni-cation Union*, 1996